# EUROPEAN PATENT APPLICATION

(11) **EP 4 644 157 A1**
(43) Date of publication of application: **05.11.2025**
(21) Application number: 23912101.5
(22) Date of filing: 26.12.2023
(51) Int. Cl.: B60K 15/063, B60K 8/00, B60K 15/01, B60K 15/05

(54) **WORK VEHICLE**

(30) Priority: 28.12.2022 JP 2022212143; 28.12.2022 JP 2022212142
(71) Applicant: KUBOTA CORPORATION, Osaka-shi, Osaka 556-8601 (JP)
(72) Inventor: TAKAKI Takahiro, Sakai-shi, Osaka 590-0908 (JP); IWAMI Kenichi, Sakai-shi, Osaka 590-0908 (JP); SAKANO Tomoyoshi, Sakai-shi, Osaka 590-0908 (JP); TAKAKI Go, Sakai-shi, Osaka 590-0908 (JP); MINAMIDE Yuki, Sakai-shi, Osaka 590-0908 (JP); AMITANI Kodai, Sakai-shi, Osaka 590-0908 (JP); HAYASHI Yosuke, Sakai-shi, Osaka 590-0908 (JP); OHNISHI Teppei, Sakai-shi, Osaka 590-0908 (JP); MORITA Atsushi, Sakai-shi, Osaka 590-0908 (JP); KAZAMA Isamu, Sakai-shi, Osaka 590-0908 (JP); MATSUI Kenshiro, Sakai-shi, Osaka 590-0908 (JP); ISHIHARA Kenji, Sakai-shi, Osaka 590-0908 (JP)
(74) Representative: Cabinet Beau de Loménie
(86) International application number: PCT/JP2023/046553
(87) International publication number: WO 2024/143322

(57) **Abstract**

To provide a working vehicle (1) having high performance of gas filling work of hydrogen gas.

A working vehicle (1) includes a vehicle body (2); a traveling device (4) to support the vehicle body (2) such that the vehicle body (2) is allowed to travel; a hydrogen tank (5) to store hydrogen gas; a driving device (6) to drive the traveling device (4) using the hydrogen gas as an energy source; a gas fill port (13) to allow a gas fill nozzle (G1) of an external hydrogen gas supplier (GS) to be connected thereto when the hydrogen tank (5) is supplied with the hydrogen gas; and a moving mechanism (14) to couple the vehicle body (2) and the gas fill port (13) to each other and to move relative positions of the gas fill port (13) and the vehicle body (2).

## Description

### Technical Field

The present invention relates to a working vehicle that is driven by electric power supplied from a fuel cell.

### Background Art

In recent years, in order to implement decarbonization, development of a vehicle that is driven by electric power supplied from a fuel cell using hydrogen as fuel has been advanced. A fuel cell vehicle disclosed in PTL 1 includes a fuel cell stack that supplies electric power to a motor for traveling, a fuel tank that stores fuel gas to be supplied to the fuel cell stack, and a gas fill port through which the fuel tank is filled with the fuel gas from the outside of the vehicle. The gas fill port is provided in a filling lid box provided at a position close to the rear of a side portion of the vehicle body. In this vehicle, when a filling nozzle is connected to the gas fill port in the filling lid box, the fuel gas is supplied to the gas fill port while the flow rate of the fuel gas is adjusted to a desirable flow rate. As a result, the fuel tank is filled with the fuel gas through a fuel gas filling pipe inside the vehicle body.

### Citation List

### Patent Literature

PTL 1: Japanese Unexamined Patent Application Publication No. 2022-128483
PTL 2: Japanese Unexamined Patent Application Publication No. 2022-147043

### Summary of Invention

### Technical Problem

As described in PTL 1, the structure around the vehicle body of a working vehicle such as a tractor is generally complex, and there are a working vehicle provided with relatively large wheels or crawlers at side portions of the vehicle body, and a working vehicle provided with a coupling mechanism for coupling a working device to a rear portion of the vehicle body and towing the working device. Thus, in this type of working vehicle, when the gas fill port is embedded in the filling lid box of the vehicle body as in the fuel cell vehicle of above-described PTL 2, there is a problem that it is difficult to connect the filling nozzle to the gas fill port and the filling work of the fuel gas cannot be smoothly performed.

Also, in the fuel cell provided in the fuel cell vehicle, the position of the tank that stores hydrogen as fuel is technically important. In general, a technique of providing the tank on an upper portion of a cabin of a working vehicle has been already considered in view of ease of filling fuel into the tank. However, in the case of providing the tank on the upper portion of the cabin, there is a problem that the bulk of the cargo becomes high when transported using a truck or the like, and thus the transportation becomes very inconvenient. Such a problem may also occur when the fuel cell or the like is provided on the upper portion of the cabin.

The present invention is made in view of the above-described problems, and an object of the present invention is to provide a working vehicle to achieve good performance of gas filling work.

Additionally, an object of the present invention is to provide a working vehicle that can keep the bulk during transportation low even when a tank or a fuel cell is provided on an upper portion of a cabin.

### Solution to Problem

The present invention uses the following technical solutions to attain the above-described objects.

A working vehicle according to an example embodiment of the present invention includes a vehicle body, a traveling device to support the vehicle body such that the vehicle body is allowed to travel, a hydrogen tank to store hydrogen gas, a driving device to drive the traveling device using the hydrogen gas as an energy source, a gas fill port to allow a gas fill nozzle of an external hydrogen gas supplier to be connected thereto when the hydrogen tank is supplied with the hydrogen gas, and a moving mechanism to couple the vehicle body and the gas fill port to each other and to move relative positions of the gas fill port and the vehicle body.

The moving mechanism may include a swing frame including a distal end portion including the gas fill port and a proximal end portion pivotally coupled to the vehicle body.

The working vehicle may further include a gas injection pipeline to guide the hydrogen gas from the gas fill port to the hydrogen tank. The gas injection pipeline may extend along the swing frame.

The moving mechanism may include a hinge to allow the swing frame to move between a folded position in which the swing frame extends in a left-right direction along a rear portion of the vehicle body and an unfolded position in which the swing frame extends rearward from the rear portion of the vehicle body.

The gas fill port may be positioned such that a connection end portion of the gas fill port is directed rearward of the vehicle body when the swing frame is in the folded position, and positioned such that the connection end portion is directed sideward of the vehicle body when the swing frame is in the unfolded position.

The working vehicle may further include a gas injection pipeline to guide the hydrogen gas from the gas fill port to the hydrogen tank. The moving mechanism may include a bendable extension pipe including a distal end portion to which the gas fill port is connected and a proximal end portion connected to the gas injection pipeline.

The moving mechanism may include a pipe housing portion to house the extension pipe when the gas fill port is moved in a direction toward the vehicle body.

The moving mechanism may include a pipe driver to move the extension pipe between a retracted position in which the extension pipe is housed in the pipe housing portion and an extended position in which the extension pipe is exposed to outside of the pipe housing portion.

The moving mechanism may be provided at a protection frame vertically provided in the vicinity of an operator's seat of the vehicle body.

The moving mechanism may be provided at a fixed frame vertically provided on the vehicle body to support the hydrogen tank.

The moving mechanism may be configured to position the gas fill port between the vehicle body and the fixed frame when the gas fill port is moved in a direction toward the vehicle body.

The driving device may include a driving motor to drive the traveling device, and a fuel cell unit to generate electric power using the hydrogen gas and supply the electric power to the driving motor.

A working vehicle according to another example embodiment of the present invention includes a vehicle body, a traveling device to support the vehicle body and cause the vehicle body to travel, a driving motor to drive the traveling device, a fuel cell to supply electric power to the driving motor, a tank to supply gas for fuel to the fuel cell, and a moving mechanism to move the fuel cell and/or the tank in an up-down direction with respect to the vehicle body.

The working vehicle may include a casing to house the tank. The moving mechanism may be configured to move the fuel cell and/or the casing in the up-down direction with respect to the vehicle body.

The working vehicle may further include a cabin to house an operator's seat provided on the vehicle body, and a hood located at a front portion of the vehicle body. The hood may be lower than the cabin, the moving mechanism may be configured to support the fuel cell and/or the casing, and move the fuel cell and/or the casing between a first position above the hood and a second position above the cabin, and the fuel cell and/or the casing in the first position may be located lower than the cabin.

The moving mechanism may include an actuator, a placement portion for placement of the fuel cell and/or the casing, and a boom portion to be driven by the actuator and support the placement portion such that the placement portion is movable in the up-down direction between the first position and the second position.

The working vehicle may further include a cabin to house an operator's seat provided on the vehicle body, and a hood located at a front portion of the vehicle body. The moving mechanism may be configured to support the casing, and move the casing between a first position above the hood and a second position above the cabin. The fuel cell may be housed inside the hood.

The working vehicle may further include a cabin to house an operator's seat provided on the vehicle body, and a hood located at a front portion of the vehicle body. The moving mechanism may be configured to support the fuel cell, and move the fuel cell between a first position above the hood and a second position above the cabin. The tank may be housed inside the hood.

### Advantageous Effects of Invention

According to the above-described working vehicle, the degree of freedom of the connection position between the gas fill port and the gas fill nozzle is high, and the performance of gas filling work of the hydrogen gas is significantly improved.

Additionally, according to the above-described working vehicle, even when the tank or the fuel cell is provided on the upper portion of the cabin, the bulk during transportation can be kept low.

### Brief Description of Drawings

[FIG. 1] FIG. 1 is a left side view of a working vehicle of a first embodiment.
[FIG. 2] FIG. 2 is a top view of the working vehicle of the first embodiment.
[FIG. 3] FIG. 3 is a rear view of the working vehicle of the first embodiment.
[FIG. 4] FIG. 4 is a block diagram illustrating a basic configuration of the working vehicle of the first embodiment.
[FIG. 5] FIG. 5 is a rear view of the periphery of a moving mechanism of the first embodiment.
[FIG. 6] FIG. 6 is a top view of the periphery of the moving mechanism of the first embodiment.
[FIG. 7] FIG. 7 is a top view of a working vehicle of a variation.
[FIG. 8] FIG. 8 is a block diagram illustrating a basic configuration of the working vehicle of the variation.
[FIG. 9] FIG. 9 is a top view of the periphery of a moving mechanism of a variation.
[FIG. 10] FIG. 10 is an overall configuration diagram of a state in which a manipulator has been coupled.
[FIG. 11] FIG. 11 is a left side view of a working vehicle of a second embodiment with a moving mechanism located in a first position.
[FIG. 12] FIG. 12 is a left side view of the working vehicle of the second embodiment with the moving mechanism located in a second position.
[FIG. 13] FIG. 13 is a top view of the working vehicle of the second embodiment with the moving mechanism located in the second position.
[FIG. 14] FIG. 14 is a left side view of a working vehicle of a third embodiment with a moving mechanism located in a first position.
[FIG. 15] FIG. 15 is a left side view of the working vehicle of the third embodiment with the moving mechanism located in a second position.
[FIG. 16] FIG. 16 is a top view of the working vehicle of the third embodiment with the moving mechanism located in the first position.
[FIG. 17] FIG. 17 is a left side view of a working vehicle of a fourth embodiment with a moving mechanism located in a first position.
[FIG. 18] FIG. 18 is a diagram schematically illustrating a motion of the moving mechanism.
[FIG. 19] FIG. 19 is a view illustrating the inside of a casing (tank casing) that can be used in the working vehicle of the second embodiment.
[FIG. 20] FIG. 20 is a view illustrating a holding body that holds a tank housed inside a hood in the working vehicle of the third embodiment.

### Description of Embodiments

### <First Embodiment>

Embodiments of the present invention will be described with reference to the drawings. A working vehicle 1 of a first embodiment is a tractor and is a type of fuel cell vehicle (FCV) that is driven using electric power generated by a fuel cell. However, the working vehicle 1 according to the present invention is not limited to the tractor. For example, the working vehicle 1 according to the present invention may be an agricultural machine other than the tractor, a construction machine, a utility vehicle, or the like.

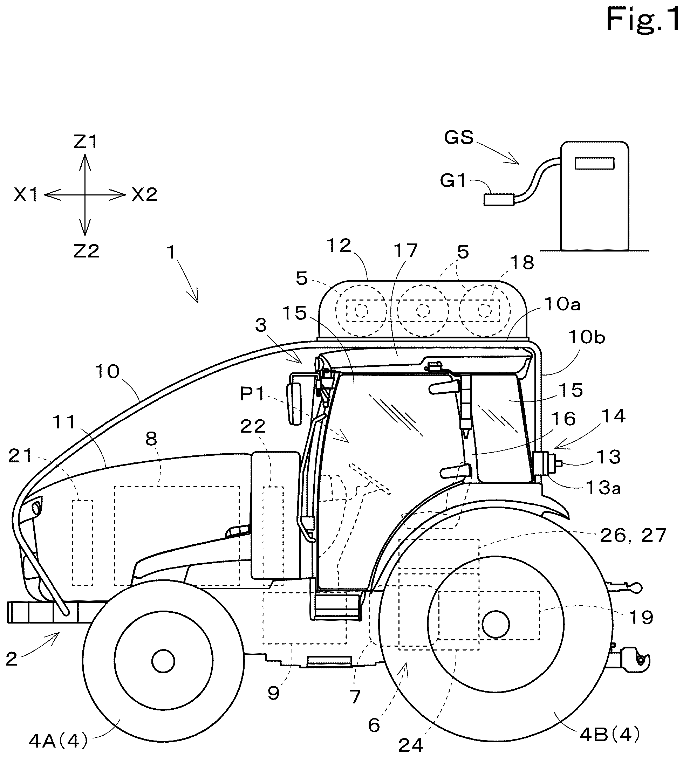

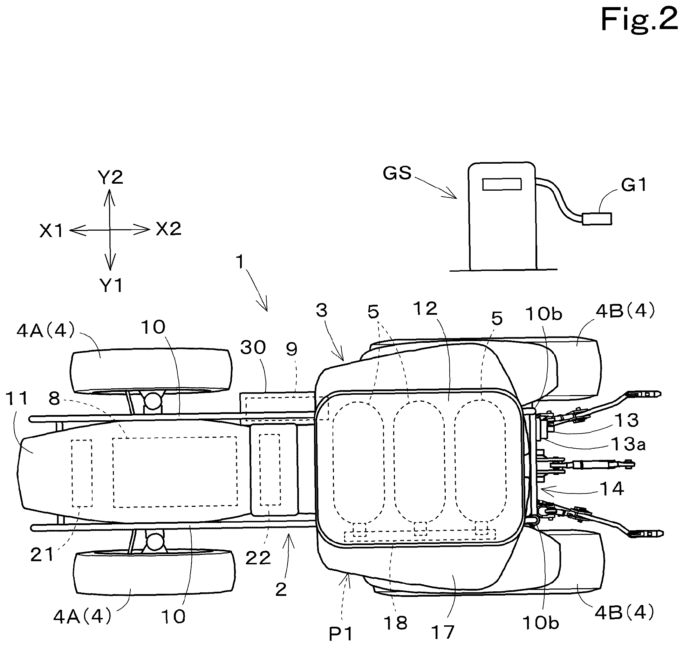

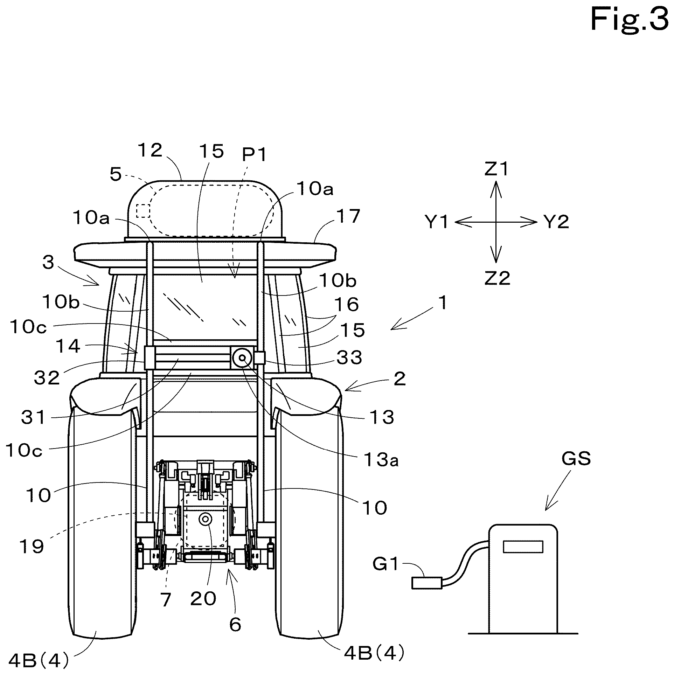

In the following description, a direction in which the working vehicle 1 travels forward/rearward (a direction indicated by arrows X1 and X2 in FIGS. 1 and 2) is described as a front-rear direction, a direction horizontally orthogonal to the direction in which the working vehicle 1 travels forward/rearward (a direction indicated by arrows Y1 and Y2 in FIGS. 2 and 3) is described as a left-right direction, and a direction vertically orthogonal to the direction in which the working vehicle 1 travels forward/rearward (a direction indicated by arrows Z1 and Z2 in FIGS. 1 and 3) is described as an up-down direction.

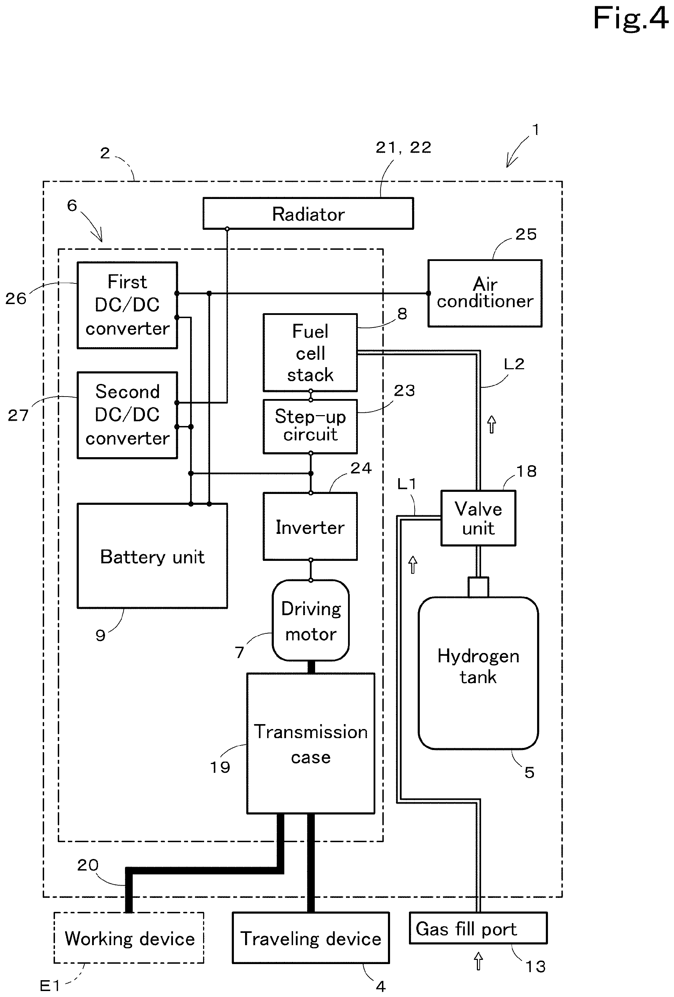

As illustrated in FIGS. 1 to 3, the working vehicle 1 includes a vehicle body 2, a cabin 3 that covers the periphery of an operator's seat P1 provided on the vehicle body 2, a traveling device 4 that supports the vehicle body 2 such that the vehicle body 2 is allowed to travel, at least one hydrogen tank 5 that stores hydrogen gas, and a driving device 6 that drives the traveling device 4 using the hydrogen gas as an energy source. As illustrated in FIGS. 1 and 4, the driving device 6 includes a driving motor 7 that drives the traveling device 4, a fuel cell stack (fuel cell unit) 8 that generates electric power using the hydrogen gas and supplies the electric power to the driving motor 7, and a battery unit 9 that stores the electric power supplied from the fuel cell stack 8.

The vehicle body 2 is provided by combining metal frame members and/or the like, and supports the cabin 3, the traveling device 4, and the driving device 6. As illustrated in FIGS. 1 to 3, the vehicle body 2 includes at least one fixed frame 10. As illustrated in FIG. 1, the cabin 3 is provided on an upper portion of the vehicle body 2, at a position close to the rear thereof. The fuel cell stack 8 is provided on the upper portion of the vehicle body 2, at a position close to the front thereof, and is housed inside a hood 11. That is, the fuel cell stack 8 is provided at a position located forward of the operator's seat P1, and is covered with a housing (hood 11) in a vehicle front portion.

As illustrated in FIGS. 1 to 3, a tank case 12 that houses the hydrogen tank 5 is provided on an upper frame portion 10a of the fixed frame 10. A gas fill port (receptacle) 13 is provided at a rear frame portion 10b of the fixed frame 10. A gas fill nozzle G1 of a hydrogen gas supplier GS installed outside the vehicle is connected to the gas fill port 13 when the hydrogen tank 5 is filled with hydrogen gas.

As illustrated in FIG. 1, the fixed frame 10 is vertically provided on the upper portion of the vehicle body 2. The fixed frame 10 is a pipe body having a long axis and has an arch shape that curves upward of the vehicle body 2 so as to straddle the cabin 3 and the hood 11. Specifically, a front end of the fixed frame 10 is coupled to a front lower position of the hood 11 at the vehicle body 2, and a rear end of the fixed frame 10 is coupled to a rear lower position of the cabin 3 at the vehicle body 2. Alternatively, the fixed frame 10 may have an arch shape that curves upward of the vehicle body 2 so as to straddle the cabin 3 at a position located rearward of the hood 11.

As illustrated in FIG. 2, the at least one fixed frame 10 includes a pair of fixed frames 10 arranged in parallel at both left and right side positions with the hood 11 interposed therebetween. The fixed frames 10 support the tank case 12 from below at a position above the cabin 3. That is, the hydrogen tank 5 is supported by the vehicle body 2 via the two left and right fixed frames 10. The fixed frames 10 have both a function of stably supporting the hydrogen tank 5 and a function of absorbing vibration of the vehicle body 2 during traveling or work to reduce an impact on the hydrogen tank 5.

As illustrated in FIG. 1, each of left and right upper frame portions 10a is provided substantially linearly in the front-rear direction. The tank case 12 is supported by and fixed to the left and right upper frame portions 10a. As illustrated in FIGS. 1 and 3, each of left and right rear frame portions 10b is provided substantially linearly in the up-down direction. As illustrated in FIG. 3, a pair of upper and lower coupling bars 10c extending in the left-right direction in substantially parallel to each other are provided between the left and right rear frame portions 10b. A moving mechanism 14 that moves the relative positions of the gas fill port 13 and the vehicle body 2 is provided between the upper and lower coupling bars 10c.

The tank case 12 is a box body capable of housing a plurality of hydrogen tanks 5, and is fixed (rigidly fixed) to the upper frame portions 10a by fixing brackets, bolts and nuts, welding, or the like. The tank case 12 of the present embodiment is made of a steel material having material properties and a thickness capable of thermally and physically protecting the hydrogen tanks 5 from the outside. The tank case 12 has a box shape that covers the entire hydrogen tanks 5 housed therein, but may have a bucket shape that opens upward, or may have a cover shape that opens downward.

The cabin 3 is a protection mechanism that protects the operator's seat P1, and includes a plurality of panels 15 vertically provided at front, rear, left, and right positions of the operator's seat P1, pillars 16 as protection frames vertically provided in the periphery of the operator's seat P1 along abutting edges of the adjacent panels 15, and a roof 17 continuously provided and supported on upper portions of the pillars 16. The upper frame portions 10a of the fixed frames 10 extend in the front-rear direction in substantially parallel to an upper surface portion of the roof 17. The tank case 12 is fixed to the upper frame portions 10a.

The traveling device 4 includes wheels rotatably supported at left and right side portions of the vehicle body 2, and includes a pair of left and right front wheels 4A and a pair of left and right rear wheels 4B. In the present embodiment, power is transmitted from the driving motor 7 to the front wheels 4A or the rear wheels 4B, or the front wheels 4A and the rear wheels 4B. Alternatively, the front wheels 4A or the rear wheels 4B, or the front wheels 4A and the rear wheels 4B to which the power is transmitted from the driving motor 7 and that serve as driving wheels may be crawlers.

Each hydrogen tank 5 is a substantially cylindrical high-pressure container made of a hard synthetic resin or the like reinforced with carbon fiber or glass fiber, and one or more hydrogen tanks 5 are housed inside the tank case 12 provided at the position above the cabin 3. In the working vehicle 1 of the present embodiment, three hydrogen tanks 5 are housed side by side in the front-rear direction inside the tank case 12. In this way, in the working vehicle 1 of the present embodiment, since the hydrogen tanks 5 are arranged at the position above the cabin 3 (operator's seat P1), there is a high degree of freedom in the arrangement configuration of the driving motor 7, the fuel cell stack 8, and the battery unit 9 with respect to the vehicle body 2. Also, when the design is changed from an existing engine drive type vehicle to a motor drive type vehicle such as the working vehicle 1 of the present embodiment, it is not necessary to significantly change the arrangement configuration of each member.

The number of mounted hydrogen tanks 5 is not limited to three. For example, only one hydrogen tank 5 may be mounted in the working vehicle 1, two hydrogen tanks 5 may be mounted in the working vehicle 1, or four or more hydrogen tanks 5 may be mounted in the working vehicle 1. Also, the arrangement of the hydrogen tank 5 is not limited to the position above the cabin 3. For example, the hydrogen tank 5 may be provided in a rear portion of the cabin 3, may be provided in a space below the operator's seat P1, or may be provided inside the hood 11.

As illustrated in FIG. 4, the hydrogen tank 5 is coupled to a gas injection pipe L1 and a gas ejection pipe L2 via a valve unit 18. The gas injection pipe L1 is a gas injection pipeline to connect the gas fill port 13 and the valve unit 18 to each other, and guides the hydrogen gas, which is led from the outside of the vehicle into the gas fill port 13, to the hydrogen tank 5. The gas ejection pipe L2 is a gas ejection pipeline to connect the fuel cell stack 8 and the valve unit 18 to each other, and guides the hydrogen gas stored in the hydrogen tank 5 to the fuel cell stack 8. In this way, the hydrogen tank 5 stores the hydrogen gas led from the outside of the vehicle into the gas fill port 13, and supplies the hydrogen gas to the fuel cell stack 8. The valve unit 18 includes an on-off valve, a pressure reducing valve, and/or the like, adjusts the flow rate of the hydrogen gas stored in the hydrogen tank 5 to a predetermined flow rate, and then leads out the hydrogen gas to the fuel cell stack 8 through the gas ejection pipe L2.

The driving motor 7 includes a rotor that rotates and a stator including a plurality of coils, and rotationally drives an output shaft at a predetermined torque and a predetermined rotation speed. As illustrated in FIG. 1, the driving motor 7 is arranged at a position located rearward of the fuel cell stack 8 and a position below the operator's seat P1. The above-described output shaft is connected to a transmission case 19.

Alternatively, a plurality of driving motors 7 may be mounted in the working vehicle 1. Specifically, for example, the working vehicle 1 includes a driving motor 7 for the front wheels 4A and a driving motor 7 for the rear wheels 4B, and the powers of these driving motors 7 are output to the front wheels 4A and the rear wheels 4B, respectively. Alternatively, driving motors 7 are independently provided for all four wheels of the front wheels 4A and the rear wheels 4B, and the powers of these driving motors 7 are output to the corresponding front wheels 4A and rear wheels 4B, respectively. In this way, when the working vehicle 1 is provided with the driving motors 7 independently for front, rear, left, and right traveling devices 4, it is not necessary to mount a power transmission device such as the above-described transmission case 19. Thus, the configuration of the driving device 6 can be simplified and made compact.

The transmission case 19 is continuously provided at a rear portion of the driving motor 7. The transmission case 19 is assembled with a transmission, a clutch, a differential gear, and the like therein, decelerates or accelerates the power input from the output shaft of the driving motor 7, and outputs the power to the traveling device 4 (the front wheels 4A and/or the rear wheels 4B). In the working vehicle 1 of the present embodiment, only one driving motor 7 is provided in the upper portion of the vehicle body 2, and the power of the driving motor 7 is distributed and output to the left and right rear wheels 4B by the transmission case 19.

The transmission case 19 not only outputs the power of the driving motor 7 to the traveling device 4 but also outputs a portion of the power to a power take-off shaft (PTO shaft) 20 provided at a rear portion of the vehicle body 2. Specifically, as illustrated in FIG. 3, the PTO shaft 20 is provided at the rear portion of the vehicle body 2. As illustrated in FIG. 4, the PTO shaft 20 is coupled to the transmission case 19, and transmits the power of the driving motor 7 to a working device (implement) E1 such as a cultivator or a baler that is used by being coupled to the working vehicle 1. In this way, the working vehicle 1 of the present embodiment can also actuate the working device E1 using the electric power generated by the fuel cell stack 8.

The fuel cell stack 8 is configured such that a plurality of unit cells, each including two types of electrodes of a positive electrode and a negative electrode, are arranged in parallel in a stacked state inside a substantially rectangular box-shaped cell casing, and collects the electric power generated by each unit cell to generate electric power at a voltage and a current required for driving the driving motor 7. The fuel cell stack 8 is connected to radiators 21 and 22 through refrigerant passages, and the above-described electrodes are adjusted to a predetermined temperature by circulating and supplying a coolant for temperature adjustment from the radiators 21 and 22. Accordingly, the fuel cell stack 8 can maintain high power generation efficiency.

As illustrated in FIG. 4, the fuel cell stack 8 is connected to an inverter 24 via a step-up circuit 23. The step-up circuit 23 steps up the electric power generated by the fuel cell stack 8. The inverter 24 converts direct-current (DC) electric power input from the step-up circuit 23 into three-phase alternating-current (AC) electric power and outputs the three-phase AC electric power to the driving motor 7. That is, the fuel cell stack 8 drives the driving motor 7 by the electric power stepped up by the step-up circuit 23. The working vehicle 1 includes at least one low-power electrical component that is actuated at a lower voltage than the voltage of the driving motor 7, and electric power stepped down by at least one step-down circuit is supplied to the low-power electrical component. The working vehicle 1 of the present embodiment includes the battery unit 9, the radiators 21 and 22, and an air conditioner 25 as the above-described low-power electrical component, and includes a first DC/DC converter 26 and a second DC/DC converter 27 as the above-described step-down circuit.

The first DC/DC converter 26 and the second DC/DC converter 27 are step-down converters that each convert the voltage of the input DC electric power into a further low voltage. The first DC/DC converter 26 supplies the electric power stepped down as described above to the battery unit 9 and the air conditioner 25. The second DC/DC converter 27 supplies the electric power stepped down as described above to the radiators 21 and 22. As illustrated in FIG. 1, the invertor 24, the first DC/DC converter 26, and the second DC/DC converter 27 are arranged at positions below the operator's seat P1 in the upper portion of the vehicle body 2.

As illustrated in FIGS. 1 and 2, the fuel cell stack 8 and the radiators 21 and 22 are housed inside the hood 11. The radiators 21 and 22 are provided at positions located forward and rearward of the fuel cell stack 8 on the upper portion of the vehicle body 2. The radiators 21 and 22 include a first radiator 21 arranged at the position located forward of the fuel cell stack 8, and a second radiator 22 arranged at the position located rearward of the fuel cell stack 8. In the present embodiment, both the first radiator 21 and the second radiator 22 are connected to the fuel cell stack 8 through refrigerant passages, and are used for the temperature adjustment of the electrodes as described above. Alternatively, one of the first radiator 21 and the second radiator 22 (for example, the first radiator 21) may be connected to the air conditioner 25 (see FIG. 4) instead of the fuel cell stack 8, and may be used to cool the inside of the cabin 3.

Both the first radiator 21 and the second radiator 22 include radiator fans, and generate cooling air by rotationally driving the radiator fans to exchange heat with the coolant that is circulated and supplied to the radiators 21 and 22. Air (cold air) that is supplied to the radiators 21 and 22 by the above-described radiator fans is led into a cold air passage inside the hood 11 from an air supply hole opened in the hood 11. Also, air (warm air) after heat exchange in the radiators 21 and 22 passes through a warm air passage provided inside the hood 11 and is led out of the vehicle body from an air discharge hole opened in the hood 11.

The battery unit 9 is a rechargeable type secondary battery such as a lithium-ion battery or a lead-acid battery, and temporarily stores the electric power generated by the fuel cell stack 8 and outputs the stored electric power to the inverter 24 and/or the like as appropriate. As illustrated in FIG. 2, the battery unit 9 is housed inside a casing 30 provided between the front wheel 4A and the rear wheel 4B, in a right side portion of the vehicle body 2.

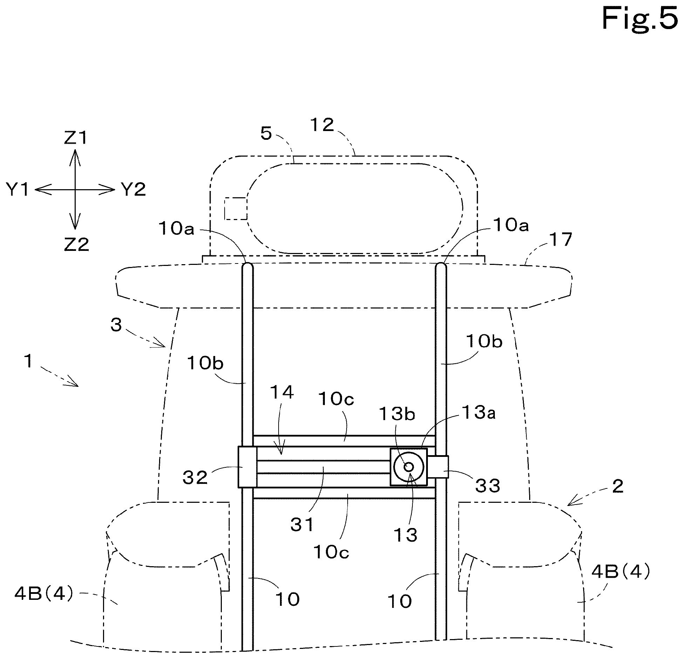

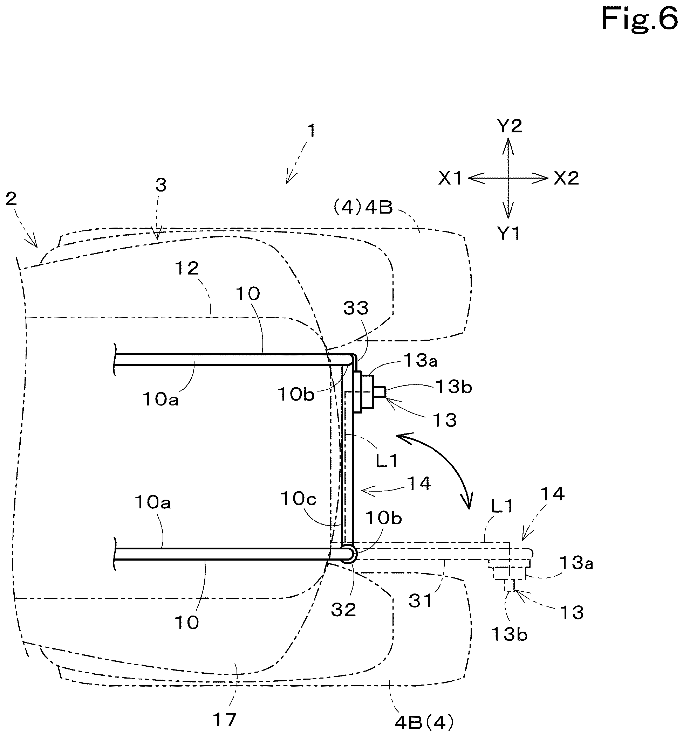

As illustrated in FIGS. 5 and 6, the gas fill port 13 is provided at the rear portion of the vehicle body 2 (fixed frame 10). Specifically, the gas fill port 13 is fixed to a filling port holder 13a provided at a position located rearward of the cabin 3. The filling port holder 13a is provided at the moving mechanism 14.

The moving mechanism 14 includes a swing frame 31 pivotally coupled to one of the left and right rear frame portions 10b, and a hinge 32 pivotally coupling the swing frame 31 to the rear frame portion 10b. The filling port holder 13a is fixed to a distal end of the swing frame 31.

The swing frame 31 is a frame body having a long axis, and extends in substantially parallel to the coupling bars 10c between the left and right rear frame portions 10b. The swing frame 31 is provided with the hinge 32 at a proximal end thereof pivotally coupled to one of the left and right rear frame portions 10b (left one in the present embodiment), and the filling port holder 13a at the distal end thereof. The swing frame 31 may be a frame body having a substantially U-shaped cross section or a substantially L-shaped cross section, or may be a pipe body having a substantially rectangular cross section or a substantially circular cross section. Also, the swing frame 31 may be pivotally coupled to the pillar 16 at the rear portion of the cabin 3, may be pivotally coupled to a side portion of the cabin 3, or may be pivotally coupled to an exterior cover of the vehicle body 2 different from the cabin 3, instead of the rear frame portion 10b.

As illustrated in FIG. 5, the hinge 32 displaces the swing frame 31 to a folded position in which the swing frame 31 has been extended in the left-right direction along the rear portion of the vehicle body 2 and an unfolded position in which the swing frame 31 has been extended rearward of the rear portion of the vehicle body 2. In the present embodiment, the swing frame 31 is configured to be displaceable from the folded position to the unfolded position in which the swing frame 31 has been rotated leftward and rearward of the vehicle body 2 by about 90 degrees. The rotation angle of the swing frame 31 is not limited to about 90 degrees as described above. For example, the swing frame 31 may be configured to be displaceable from the folded position to an unfolded position in which the swing frame 31 has been rotated leftward of the vehicle body 2 by about 180 degrees.

A lock mechanism 33 that inhibits the gas fill port 13 from moving is provided at the rear frame portion 10b opposite to the hinge 32 (right one in the present embodiment). Specifically, the lock mechanism 33 is provided between the upper and lower coupling bars 10c of the right rear frame portion 10b, and when the swing frame 31 is in the folded position, the filling port holder 13a is fitted to and held by the lock mechanism 33. Accordingly, the swing frame 31 cannot rotate in an unfolding direction. That is, the gas fill port 13 cannot move to the unfolded position. In contrast, when a worker manually performs an unlocking operation of the lock mechanism 33, the fitted state of the filling port holder 13a with the lock mechanism 33 is released. Accordingly, the swing frame 31 can rotate in the unfolding direction. That is, the gas fill port 13 can move to the unfolded position. In this way, the working vehicle 1 of the present embodiment can fix and hold the gas fill port 13 in the folded position by the lock mechanism 33, and therefore it is possible to prevent or reduce that the gas fill port 13 is separated from the vehicle body 2 due to the vibration of the vehicle body 2 during traveling or work. Alternatively, the lock mechanism 33 may be provided at the distal end of the swing frame 31 instead of the rear frame portion 10b, and may be fitted to the rear frame portion 10b to inhibit the gas fill port 13 from moving.

The gas fill port 13 is provided to protrude in a direction (the front-rear direction in the folded position) substantially horizontally orthogonal to the extension direction (the left-right direction in the folded position) of the swing frame 31. Thus, when the swing frame 31 is in the folded position, the gas fill port 13 is arranged close to the rear portion of the vehicle body 2 in a posture with a connection end portion 13b at the distal end directed rearward of the vehicle body 2. In contrast, when the swing frame 31 is in the unfolded position, the gas fill port 13 is arranged to be separated rearward of the vehicle body 2 in a posture with the connection end portion 13b at the distal end directed sideward of the vehicle body 2. That is, in the working vehicle 1 of the present embodiment, the gas fill port 13 can be fixed to the vehicle body 2 by the swing frame 31 being displaced to the folded position (in a direction toward the vehicle body 2). In contrast, the gas fill nozzle G1 can be connected to the gas fill port 13 from a position slightly away from the vehicle body 2 rearward and sideward by the swing frame 31 being displaced to the unfolded position (in a direction away from the vehicle body 2). In this way, the working vehicle 1 of the present embodiment can change the position and the direction of the gas fill port 13 by rotating the swing frame 31.

The gas fill port 13 is connected to the gas injection pipe L1 (see FIG. 4). The gas injection pipe L1 extends along the swing frame 31, the hinge 32, and the rear frame portion 10b, and is connected to the valve unit 18. In the present embodiment, the gas injection pipe L1 is a bendable gas hose, and is freely deformed in accordance with the motion of the swing frame 31. The gas injection pipe L1 is defined by, for example, a gas hose of a composite material provided by combining a synthetic resin material that does not allow hydrogen gas to permeate to the outside and a metal wire. The gas injection pipe L1 may be inserted through an inner space portion of the swing frame 31, the hinge 32, and the rear frame portion 10b, or the swing frame 31, the hinge 32, and the rear frame portion 10b may be coupled to each other to define one gas pipeline as the gas injection pipe L1 as long as sufficient hermeticity of the connection portion and the like can be ensured. Alternatively, the gas injection pipe L1 may be defined by a non-bendable pipe body, such as a metal gas pipe, as long as only the periphery of the hinge 32 is deformable in accordance with the motion of the swing frame 31.

### <Variation>

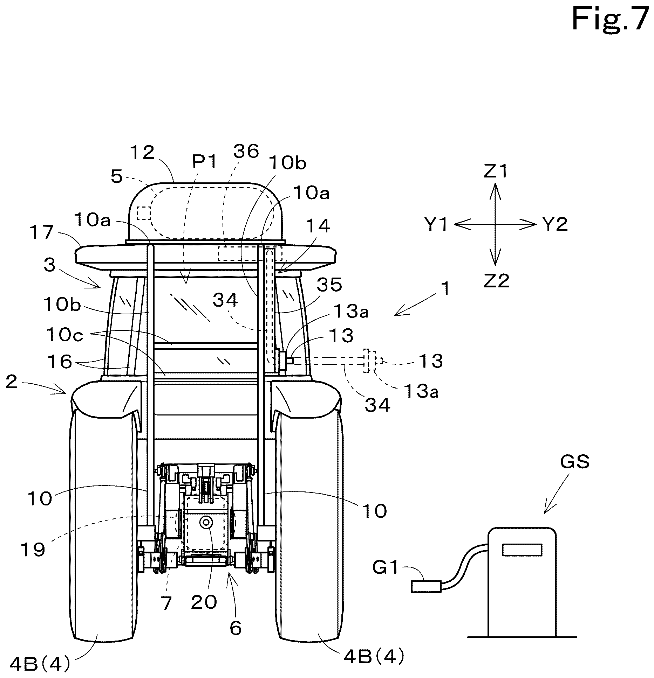

In the working vehicle 1 of the above-described first embodiment, the moving mechanism 14 that moves the relative positions of the gas fill port 13 and the vehicle body 2 includes the swing frame 31 pivotally coupled to the rear frame portion 10b. However, as illustrated in FIG. 7, the working vehicle 1 may include a bendable extension pipe 34 as the moving mechanism 14 instead of the swing frame 31.

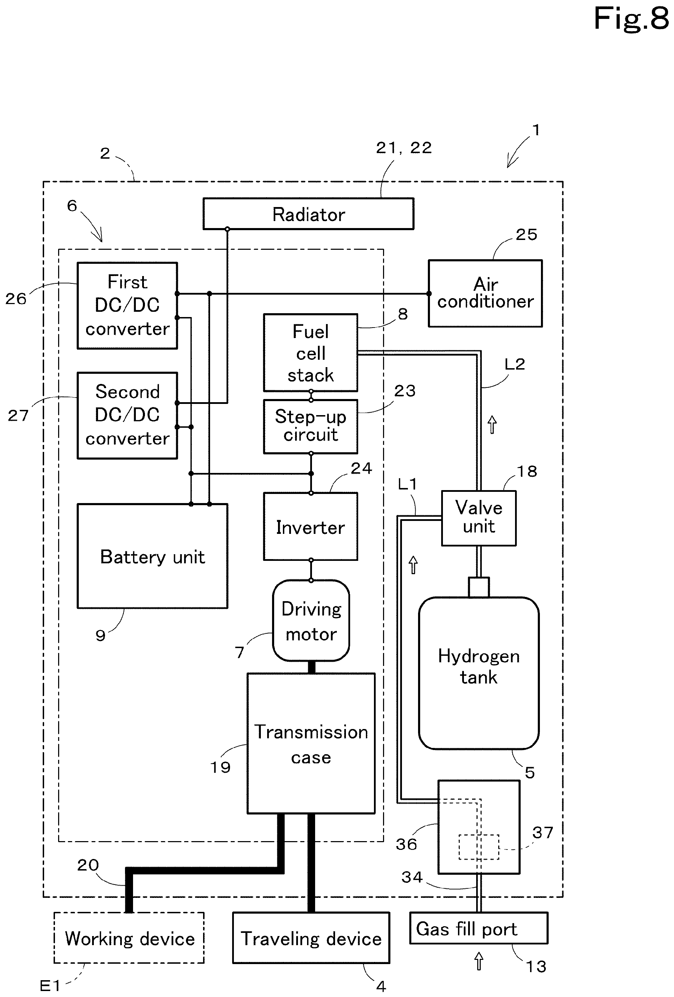

Specifically, the extension pipe 34 is a long bendable gas hose, and is defined by, for example, a gas hose of a composite material provided by combining a synthetic resin material that does not allow hydrogen gas to permeate to the outside and a metal wire. As illustrated in FIG. 8, the extension pipe 34 has a distal end portion to which the gas fill port 13 is connected and a proximal end portion connected to the gas injection pipe L1. The gas injection pipe L1 of the present embodiment is a gas injection pipeline extending between a pipe housing portion 36 (described later) and the valve unit 18, and is defined by a non-bendable pipe body such as a metal gas pipe. Alternatively, the gas injection pipe L1 may be defined by one pipe body together with the extension pipe 34.

As illustrated in FIG. 7, the extension pipe 34 is inserted through a cylindrical sleeve 35 provided at the rear portion of the vehicle body 2. The sleeve 35 extends from a rear portion of the roof 17 of the cabin 3 along one of the left and right rear frame portions 10b (right one in the present embodiment). The filling port holder 13a is detachably coupled to a lower end portion of the sleeve 35 in a posture with the connection end portion 13b at the distal end directed sideward of the vehicle body 2. Alternatively, the filling port holder 13a may be coupled to the sleeve 35 in a posture with the connection end portion 13b at the distal end of the gas fill port 13 directed rearward of the vehicle body 2.

A pipe housing portion 36 that houses a portion of the extension pipe 34 is provided inside the roof 17. The extension pipe 34 is housed in the pipe housing portion 36 in a state in which a portion of the extension pipe 34 has been bent when the filling port holder 13a has been coupled to the sleeve 35. Thus, when the filling port holder 13a is detached from the sleeve 35 and separated sideward or rearward of the vehicle body 2, the extension pipe 34 is brought into an extended state in which the extension pipe 34 has been exposed to the outside of the sleeve 35. In contrast, when the filling port holder 13a is attached to the sleeve 35 and made close to the rear portion of the vehicle body 2, the extension pipe 34 is brought into a retracted state in which the extension pipe 34 has been housed inside the sleeve 35.

That is, in the working vehicle 1 of the present embodiment, the gas fill nozzle G1 can be connected to the gas fill port 13 from a position slightly away from the vehicle body 2 rearward and sideward by the extension pipe 34 being displaced to the extended position (in a direction away from the vehicle body 2) in which the extension pipe 34 has been housed inside the pipe housing portion 36. In contrast, the gas fill port 13 can be fixed to the vehicle body 2 by the extension pipe 34 being displaced to a retracted position (in a direction toward the vehicle body 2) in which the extension pipe 34 has been exposed to the outside of the pipe housing portion 36. In this way, the working vehicle 1 of the present embodiment can change the position and the direction of the gas fill port 13 by extending and retracting the extension pipe 34. Also, since the extension pipe 34 of the present embodiment is made of a bendable member, the position and the direction of the gas fill port 13 can be changed more freely. Alternatively, the pipe housing portion 36 may be provided inside the cabin 3 or may be provided inside the tank case 12, instead of inside the roof 17.

As illustrated in FIG. 8, the pipe housing portion 36 includes a pipe driver 37 that displaces the extension pipe 34 to the retracted position and the extended position in accordance with an operation of an operation switch or the like provided in the working vehicle 1. For example, the pipe driver 37 includes a pipe holder that holds the extension pipe 34 and an actuator that moves the above-described pipe holder in a predetermined direction, and drives the above-described actuator by electric power supplied from the battery unit 9 to pull a portion of the extension pipe 34 into the pipe housing portion 36 or push the portion of the extension pipe 34 out of the pipe housing portion 36. Alternatively, the working vehicle 1 may be configured such that the pipe driver 37 is not provided and the worker manually pulls out the extension pipe 34 from the sleeve 35 to the outside or pushes the extension pipe 34 back into the sleeve 35.

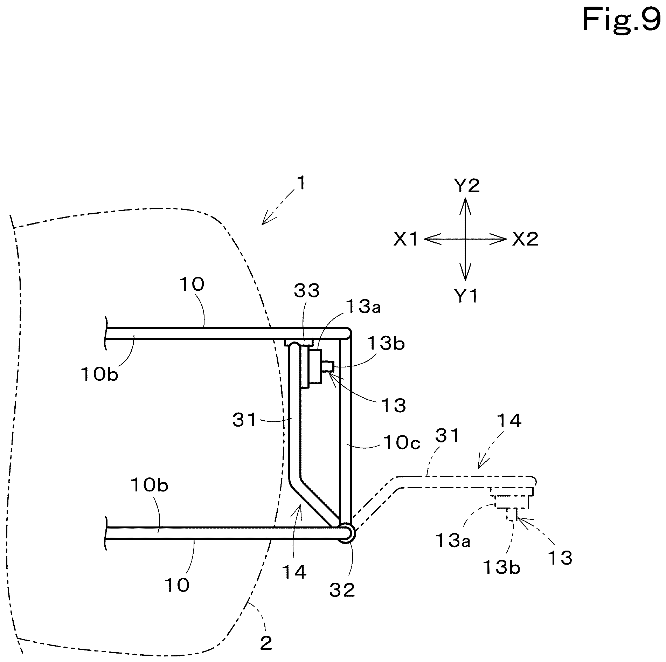

In the above-described embodiment, the gas fill port 13 is arranged in the state of protruding outward of the vehicle body 2 when the swing frame 31 has been displaced to the folded position or when the extension pipe 34 has been displaced to the retracted position. However, as illustrated in FIG. 9, the gas fill port 13 may be configured to be arranged between the vehicle body 2 and the fixed frame 10, that is, inward of the fixed frame 10 at the vehicle body 2 so as not to protrude outward of the vehicle body 2. Accordingly, an external object such as the worker or a tree is less likely to contact the gas fill port 13. Alternatively, the filling port holder 13a may include a lid body 13c that covers and closes the gas fill port 13. Accordingly, the worker or an external object is less likely to contact the gas fill port 13.

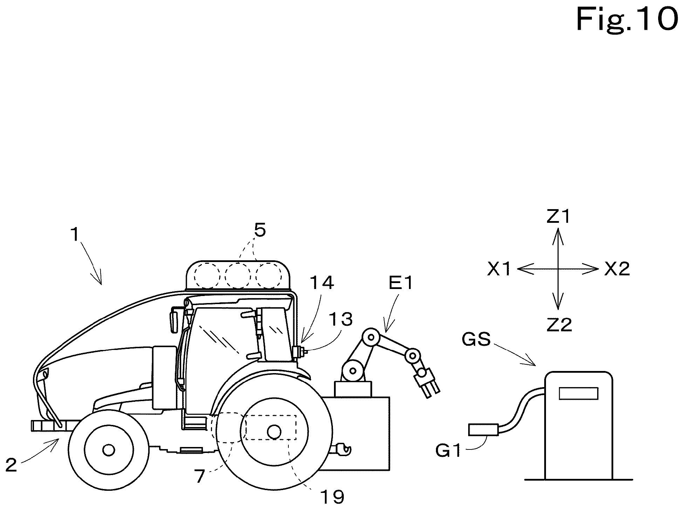

In the working vehicle 1 of the above-described embodiment, when storing hydrogen gas in the hydrogen tank 5, the worker needs to manually connect the gas fill nozzle G1 of the hydrogen gas supplier GS to the gas fill port 13, as in the case of the fuel cell vehicle of related art. Thus, as illustrated in FIG. 10, a manipulator (working device E1) that is driven by the output from the PTO shaft 20 may be coupled to the working vehicle 1, and the gas fill nozzle G1 may be connected to the gas fill port 13 by the manipulator being operated. Accordingly, the labor burden on the worker during the gas filling work can be reduced, and safety can be significantly improved.

### <Second Embodiment>

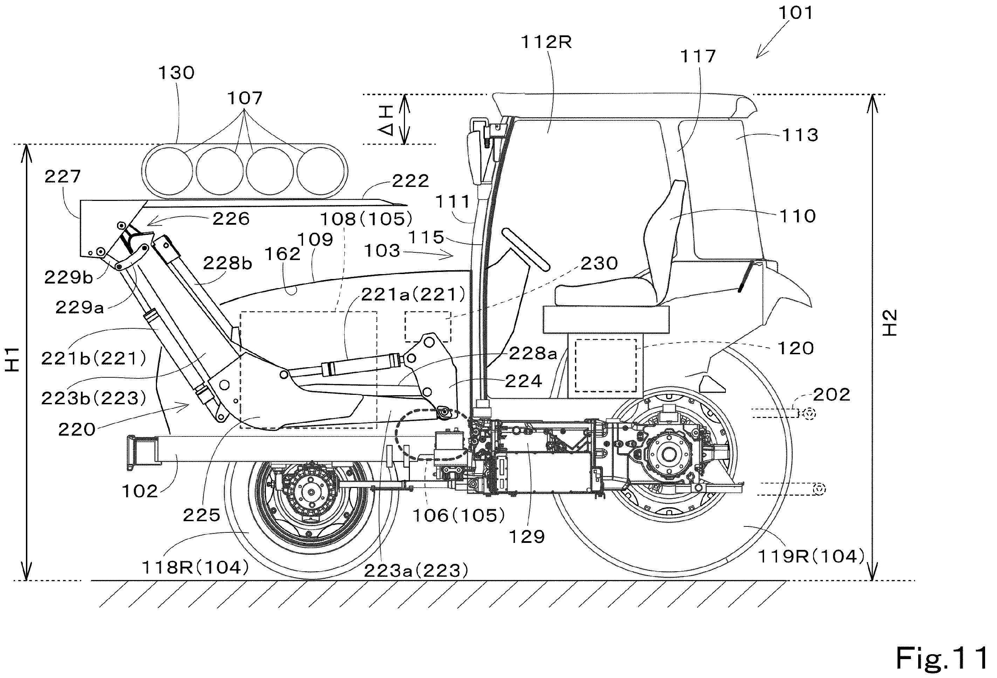

FIG. 11 is a left side view of a tractor (working vehicle 101) according to a second embodiment. The working vehicle 101 of the second embodiment is a fuel cell vehicle (FCV) that generates electric power by causing an electrode reaction of hydrogen as fuel and is driven using the electric power. The working vehicle 101 is provided with at least one tank 107 that stores hydrogen or the like as fuel, and a fuel cell 108 that generates electric power using the fuel such as hydrogen gas stored in the tank 107.

The term "storing" of the present invention includes not only storing of liquefied hydrogen gas or the like but also storing of hydrogen gas occluded in a metal compound or the like.

Also, since methane or the like other than hydrogen may be used as fuel for a fuel cell vehicle, a fuel cell vehicle that generates electric power using fuel such as methane is also included in the working vehicle 101 of the present invention. In this case, fuel such as methane is stored in the tank 107, and the fuel cell 108 generates electric power using the fuel such as methane.

Also, in the second embodiment, a tractor is taken as an example of the working vehicle 101. However, the working vehicle 101 according to the present invention is not limited to the tractor, and may be, for example, an agricultural machine (such as a combine or a rice transplanter) other than the tractor, a construction machine, a utility vehicle, or the like.

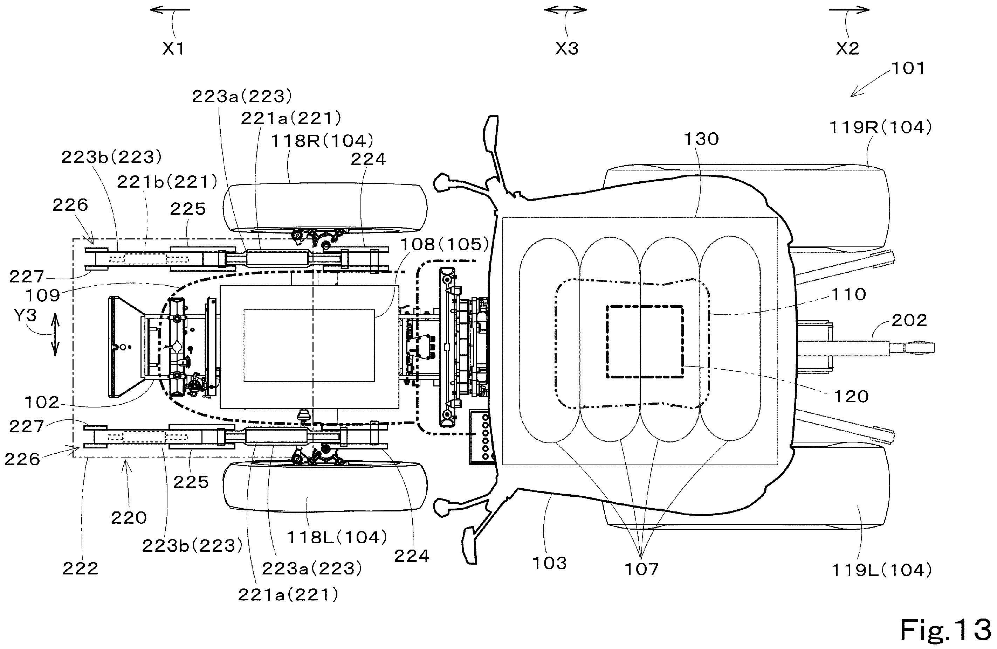

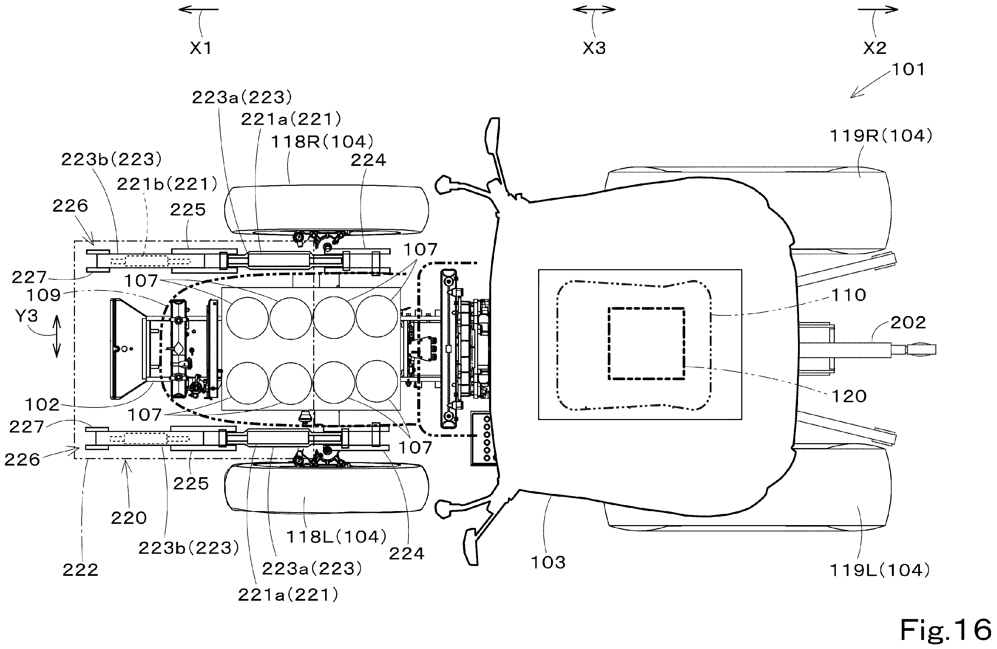

In the following description, a direction indicated by arrow X1 in FIGS. 13 and 16 (a forward travel direction of the working vehicle 101) is referred to as a forward side. A direction indicated by arrow X2 in FIGS. 13 and 16 (a rearward travel direction of the working vehicle 101) is referred to as a rearward side. A direction indicated by arrow X3 in FIGS. 13 and 16 is described as a front-rear direction.

Also, a left-right direction (a direction indicated by arrow Y3 in FIGS. 13 and 16) that is horizontally orthogonal to the front-rear direction is described as a vehicle-body width direction Y3 or a width direction. The vehicle-body width direction Y3 is a width direction of the working vehicle 101. A direction from a central portion in the width direction of the working vehicle 101 to the right or from the central portion to the left is described as an outward side in the vehicle-body width direction Y3 (an outward side in the width direction). That is, the outward side in the width direction is a direction away from the center in the width direction of the working vehicle 101 in the vehicle-body width direction Y3. The direction opposite to the outward side in the width direction is described as an inward side in the vehicle-body width direction Y3 (an inward side in the width direction). That is, the inward side in the width direction is a direction toward the center in the width direction of the working vehicle 101 in the vehicle-body width direction Y3.

As illustrated in FIGS. 11 to 13, the working vehicle 101 includes a vehicle body 102, a cabin 103, at least one traveling device 104, and a driving device 105. A working device can be coupled to the vehicle body 102. The cabin 103 houses an operator's seat 110 provided on the vehicle body 102. The cabin 103 is located on a rear portion of the vehicle body 102. A hood 109 is located on a front portion of the vehicle body 102. The traveling device 104 supports the vehicle body 102 and causes the vehicle body 102 to travel. The driving device 105 drives the traveling device 104.

Hereinafter, the vehicle body 102, the cabin 103, the hood 109, the traveling device 104, and the driving device 105 included in the working vehicle 101 will be described.

As illustrated in FIGS. 11 to 13, the vehicle body 102 is provided in a lower portion of the working vehicle 101. The at least one traveling device 104 includes traveling devices 104 located at both ends in the vehicle-body width direction of the vehicle body 102. The driving device 105 is located in an upper portion of the vehicle body 102. The cabin 103 is located on the rear portion of the vehicle body 102, and the hood 109 is located on the front portion of the vehicle body 102. The cabin 103 and the hood 109 are fixed to the vehicle body 102 in a state in which the cabin 103 and the hood 109 have been placed on the vehicle body 102. That is, the vehicle body 102 of the second embodiment supports the traveling devices 104, the driving device 105, the cabin 103, and the hood 109. Also, a transmission case 129 that transmits power from the driving device 105 to the traveling devices 104 is provided in the rear portion of the vehicle body 102. The front portion of the vehicle body 102 is provided by combining metal frame members and/or the like so as to exhibit high rigidity.

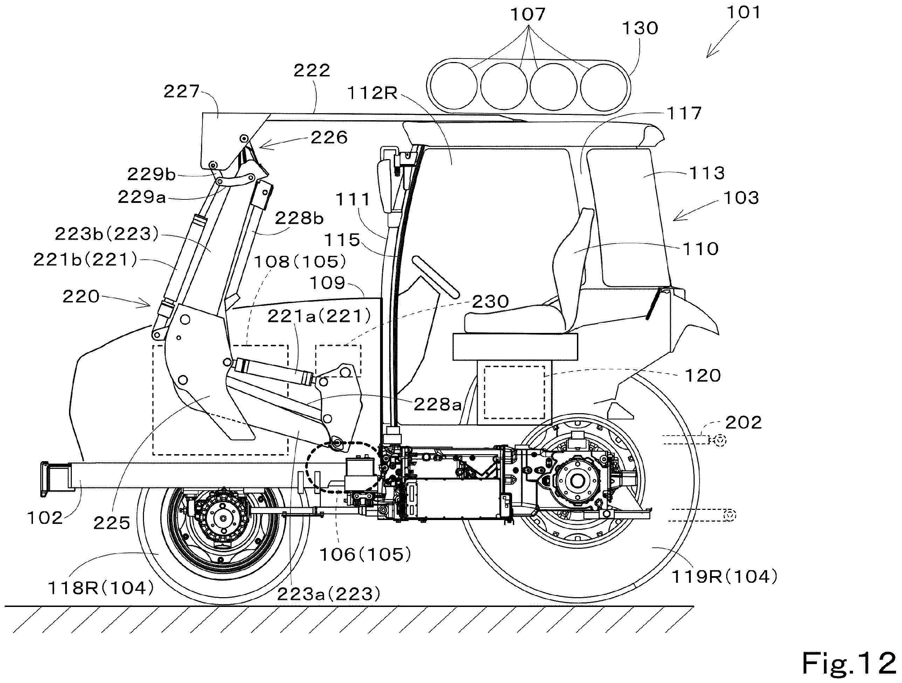

As illustrated in FIGS. 11 and 12, the cabin 103 is a box body mounted on the rear portion of the vehicle body 102, and the operator's seat 110 is located inside the cabin 103. The cabin 103 includes front, rear, left, and right panels and pillars located between adjacent panels. Specifically, the cabin 103 includes a front panel 111 located forward of the operator's seat 110, door panels located leftward and rightward of the operator's seat 110, and a rear panel 113 located rearward of the operator's seat 110.

Also, the cabin 103 includes a left front pillar, a right front pillar 115, a left rear pillar, and a right rear pillar 117. The left front pillar is provided between the front panel 111 and a left door panel. The right front pillar 115 is provided between the front panel 111 and a right door panel 112R. The left rear pillar is provided between the rear panel 113 and the left door panel. The right rear pillar 117 is provided between the rear panel 113 and the right door panel 112R.

The hood 109 is a cover mounted on the front portion of the vehicle body 102. The hood 109 is made of a metal plate or the like and has a shape in which the rear and lower sides are opened and the front, left, right, and upper sides are closed.

The working vehicle 101 of the second embodiment has a housing portion 162 inside the hood 109. In the second embodiment, the fuel cell 108, a driving motor 106, and the like are housed in the housing portion 162. When the housing portion 162 is provided inside the hood 109, the housed objects such as the fuel cell 108 are covered with the hood 109, and the fuel cell 108 and the like can be protected from traveling wind, rain, sludge, and dust by the hood 109.

The traveling device 104 can support the vehicle body 102 and cause the vehicle body 102 to travel with respect to a road surface (ground). In other words, the traveling device 104 applies a propelling force to the vehicle body 102. In the case of the second embodiment, the traveling device 104 includes a left front wheel 118L, a right front wheel 118R, a left rear wheel 119L, and a right rear wheel 119R made of rubber tires or the like. The left rear wheel 119L and the right rear wheel 119R are made of rubber tires having a larger diameter than the diameter of the left front wheel 118L and the right front wheel 118R, and support a large load applied to the rear portion of the vehicle body 102. In the traveling device 104 of the present invention, power is transmitted from the driving device 105 to a portion of or all of the left front wheel 118L, the right front wheel 118R, the left rear wheel 119L, and the right rear wheel 119R. A crawler or the like may be used as the traveling device 104 instead of the rubber tire.

As illustrated in FIGS. 11 to 15 and 17, the driving device 105 of the present invention is located at the vehicle body 102 and generates power for driving the traveling device 104. The driving device 105 of the second embodiment uses electric power generated by the fuel cell 108. Specifically, the driving device 105 includes the driving motor 106 that generates power for driving the traveling device 104, the fuel cell 108 that supplies electric power to the driving motor 106, and a battery 120 that stores the electric power supplied from the fuel cell 108. Also, the working vehicle 101 is provided with the tank 107 that supplies hydrogen gas for fuel to the fuel cell 108.

Hereinafter, the driving motor 106, the fuel cell 108, and the battery 120 included in the driving device 105, and the tank 107 will be described.

As illustrated in FIGS. 11 to 13, the driving motor 106 is, for example, an interior permanent magnet DC or AC synchronous motor, a wire-wound field type synchronous motor, or the like. One driving motor 106 is located slightly forward of the center in the front-rear direction of the vehicle body 102. The driving motor 106 includes an output shaft extending rearward and rotationally drives the output shaft. A rear end of the output shaft is connected to the transmission case 129.

The transmission case 129 is provided with a transmission, a clutch, a differential gear, and the like that speed-change power transmitted to the output shaft of the driving motor 106. The transmission case 129 decelerates or accelerates the power input from the output shaft, and outputs the decelerated or accelerated power to the left front wheel 118L, the right front wheel 118R, the left rear wheel 119L, and/or the right rear wheel 119R of the traveling device 104. For example, when the working vehicle 101 is of rear-wheel drive type, the power is transmitted only to the left rear wheel 119L and the right rear wheel 119R. In contrast, when the working vehicle 101 is of four-wheel drive type, the power is transmitted to all of the left front wheel 118L, the right front wheel 118R, the left rear wheel 119L, and the right rear wheel 119R.

The driving motor 106 of the second embodiment is located at only one position in the upper portion of the vehicle body 102, and the power generated by the one driving motor 106 is distributed to the left front wheel 118L, the right front wheel 118R, the left rear wheel 119L, and/or the right rear wheel 119R. However, the number of driving motors 106 installed in the driving device 105 of the present invention may be changed as appropriate.

In the working vehicle 101 of the second embodiment, the transmission case 129 not only transmits the decelerated or accelerated power to the traveling device 104, but also transmits a portion of the power to a working device. Specifically, a power take-off shaft (PTO shaft) is provided at the rear portion of the working vehicle 101 (a rear end of the transmission case 129), and the power transmitted (input) to the transmission case 129 is output not only to the traveling device 104 but also to the PTO shaft. Accordingly, it is possible to actuate a working device (implement) using the electric power generated by the fuel cell 108.

Also, a coupling device (three-point linkage 202) may be provided at the rear portion of the working vehicle 101 (the rear end of the transmission case 129) of the present embodiment. When such a three-point linkage 202 is provided, any one of various implements (working devices) can be attached to the rear of the working vehicle 101 to change the posture or drive the implement, and the working vehicle 101 can perform various work.

The working device is an implement such as a cultivator, a rotary, a mulcher, a hammer knife mower, a levee making machine, a farm transport machine, a seeding machine, a harrow, or a ridging machine.

However, the PTO shaft and the three-point linkage 202 described above are not necessarily provided. In the working vehicle 101 such as an agricultural machine, for example, a combine or a rice transplanter, or a construction machine, there may be a case where the working vehicle is not installed. Also, in addition to the driving motor 106 described above, a hydraulic pump that is driven by power output from the driving motor 106, an electric motor different from the driving motor 106, or the like may be provided to hydraulically or electrically actuate the working device (implement).

The fuel cell 108 supplies electric power for driving the driving device 105. The fuel cell 108 generates electricity by causing an electrode reaction between hydrogen as fuel and oxygen. The hydrogen that is supplied to the fuel cell 108 is occluded in the tank 107. The fuel cell 108 houses a plurality of electrodes stacked in multiple layers. The hydrogen gas in the tank 107 is supplied to the fuel cell 108 via a valve unit, and an electrode reaction is performed in the fuel cell 108. In the electrode reaction in the fuel cell 108, carbon dioxide, which is inevitably discharged in a combustion reaction of an internal combustion engine, is not discharged. Thus, the working vehicle 101 of the present invention that is driven using the electric power generated by the fuel cell 108 is promising for implementing decarbonization.

Specifically, the fuel cell 108 includes a plurality of unit cells, each of which includes two types of electrodes of a positive electrode and a negative electrode, in a stacked state inside a battery casing having a box shape. The positive electrode and the negative electrode have sheet shapes or film shapes using a positive electrode material and a negative electrode material, respectively. Each unit cell includes one positive electrode and one negative electrode, and adjacent unit cells are separated from each other by a separator. The hydrogen gas in the tank 107 is supplied to the positive electrode, and oxygen gas (oxidizing gas) compressed by a compressor or the like is supplied to the negative electrode, and a battery reaction (power generation) is performed by each unit cell. The fuel cell 108 collects the electric power generated by each unit cell to generate electric power at a voltage and a current capable of driving the driving device 105.

The fuel cell 108 can adjust the temperature of the electrodes provided therein to a temperature at which the power generation efficiency is high (a temperature of about 70°C in the case of a hydrogen fuel cell). Also, hydrogen gas is supplied to the fuel cell 108 from the tank 107 through a gas pipe.

The tank 107 houses gas for power generation by the fuel cell 108. As the tank 107, a long cylinder made of a hard synthetic resin or the like reinforced with carbon fiber or glass fiber is used. As illustrated in FIGS. 11 to 13, the tank 107 is located on an upper portion of the cabin 103 in a state in which the tank 107 has been housed in a casing 130 (hereinafter referred to as "tank casing 130"). In the case of the second embodiment, four tanks 107 (cylinders) are housed in the tank casing 130 so as to be arranged in the front-rear direction with their axes directed in the vehicle-body width direction.

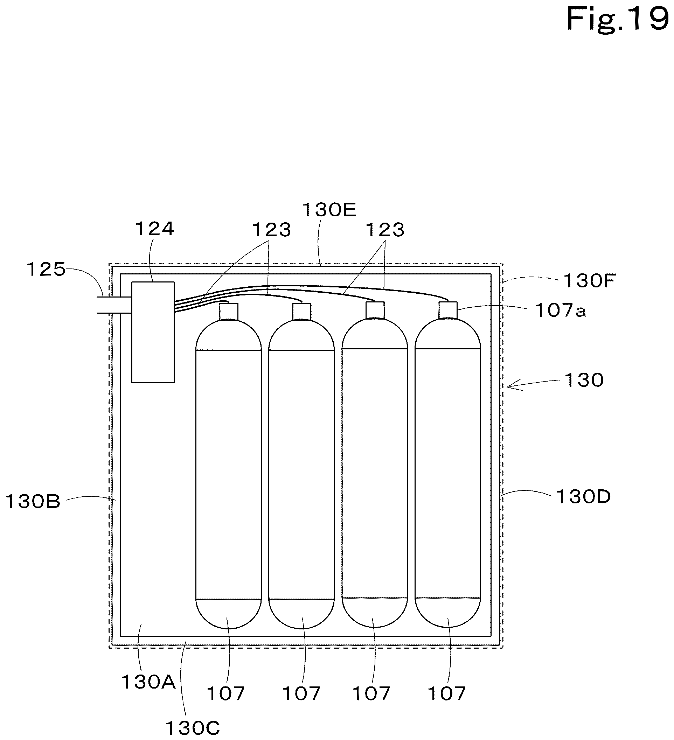

FIG. 19 is a view illustrating the inside of the tank casing 130. The tank casing 130 is attached to a placement portion 222 of a moving mechanism 220. The tank casing 130 has a bottom wall portion 130A placed on the placement portion 222 of the moving mechanism 220, a front wall portion 130B located on the front in a state of being fixed to the moving mechanism 220, a left wall portion 130C located on the left in a state of being fixed to the moving mechanism 220, a rear wall portion 130D located on the rear in a state of being fixed to the moving mechanism 220, a right wall portion 130E located on the right in a state of being fixed to the moving mechanism 220, and an upper wall portion 130F located on the upper side in a state of being fixed to the moving mechanism 220. The tank casing 130 has a box shape defined by the bottom wall portion 130A, the front wall portion 130B, the left wall portion 130C, the rear wall portion 130D, the right wall portion 130E, and the upper wall portion 130F, and the tank 107 is housed in a space surrounded by the bottom wall portion 130A, the front wall portion 130B, the left wall portion 130C, the rear wall portion 130D, the right wall portion 130E, and the upper wall portion 130F. Alternatively, a bracket may be provided on at least one of the bottom wall portion 130A, the front wall portion 130B, the left wall portion 130C, the rear wall portion 130D, and the right wall portion 130E, and the bracket may be detachably attached to the placement portion 222 with a fastener such as a bolt and a nut to allow the tank casing 130 to be attached to and detached from the moving mechanism 220.

A neck 107a is provided at a distal end of each tank 107. A gas pipe 123 is coupled to the neck 107a of the tank 107 via a safety valve (solenoid valve).

The gas pipe 123 is provided for each of the plurality of tanks 107, and guides the hydrogen gas in each tank 107 to a valve unit 124. The gas pipe 123 uses a hose or the like of a composite material in which a synthetic resin capable of avoiding permeation of hydrogen gas and a flexible metal wire are combined.

The valve unit 124 collects the hydrogen gas sent from the tanks 107 through the gas pipes 123 and appropriately mixes the hydrogen gas. The valve unit 124 includes a solenoid valve or the like capable of adjusting the pressure and the flow rate of the hydrogen gas, and can adjust the hydrogen gas to have a pressure and a flow rate suitable for power generation by the fuel cell 108. The valve unit 124 is provided with a connection pipe 125. A distal end of the connection pipe 125 protrudes outward of the tank casing 130. The connection pipe 125 protrudes outward from at least one wall portion of the front wall portion 130B, the left wall portion 130C, the rear wall portion 130D, and the right wall portion 130E. A pipe connected to the fuel cell 108 is connected to the distal end of the connection pipe 125. Accordingly, the hydrogen gas stored in the tank 107 housed in the tank casing 130 can be sent to the fuel cell 108.

A hydraulic pump 230 that generates hydraulic pressure is located inside the hood 109 described above. A hydraulic pipe is coupled to the hydraulic pump 230. A distal end of the hydraulic pipe is connected to an actuator 221 (a first actuator 221a and a second actuator 221b) of the moving mechanism 220 (described later).

The battery 120 stores electricity generated by the fuel cell 108. In the working vehicle 101 of the second embodiment, the battery 120 is located below the operator's seat 110. When the battery 120 is located below the operator's seat 110, the heavy battery 120 is at a lower position in the vehicle, the center of gravity of the working vehicle 101 is lowered, and the traveling performance can be stabilized.

The working vehicle 101 of the present invention includes the moving mechanism 220 as a feature. The moving mechanism 220 moves the fuel cell 108 and the tank 107, which are two of the driving motor 106, the fuel cell 108, and the battery 120 provided in the driving device 105, and the tank 107, in the up-down direction with respect to the vehicle body 102. That is, the moving mechanism 220 may move only the fuel cell 108 in the up-down direction, may move only the tank 107 in the up-down direction, or may move both the fuel cell 108 and the tank 107.

The targets to be moved by the moving mechanism 220 as described above are limited to the fuel cell 108 and the tank 107. This is because the fuel cell 108 and the tank 107 may be located on the upper portion of the cabin 103, and are members having relatively large volumes. When large-volume members such as the fuel cell 108 and the tank 107 are located on the upper portion of the cabin 103, the bulk of the cargo becomes too high during transportation of the working vehicle 101, and transportation becomes difficult. Thus, the working vehicle 101 of the present invention is provided with the moving mechanism 220 that moves the fuel cell 108 and/or the tank 107 downward from the upper portion of the cabin 103.

In the following second embodiment, the moving mechanism 220 of the present invention will be described by taking, as an example, a moving mechanism 220 that moves only the tank 107 as a moving target and moves the tank 107 downward from the upper portion of the cabin 103.

In the following description, the moving mechanism 220 moves the tank casing 130 housing the tank 107 as a moving target. However, the moving mechanism 220 may move the tank 107 (not housed in the casing) as a moving target. When the tank 107 is a moving target, the "tank casing 130" in the following description may be read as the "tank 107".

The moving mechanism 220 of the second embodiment moves the tank casing 130 housing the tank 107 upward/downward while supporting the tank casing 130. The moving mechanism 220 moves the tank casing 130 between a first position SP1 and a second position SP2. The first position SP1 is located above the hood 109, and the second position SP2 is located above the cabin 103. That is, since the hood 109 and the cabin 103 are arranged at a distance in the front-rear direction, when the tank casing 130 is moved between the first position SP1 and the second position SP2, the tank casing 130 is necessarily moved along the front-rear direction.

In a state in which the tank casing 130 is in the second position SP2, a pipe that is connected to the fuel cell 108 is connected to the connection pipe 125 (see FIG. 19) protruding outward of the tank casing 130. In a state in which the tank casing 130 is in the first position SP1, the connection between the pipe that is connected to the fuel cell 108 and the connection pipe 125 is released.

Also, the height of the tank casing 130 located in the first position SP1 is arranged at a position lower than an upper surface of the cabin 103. That is, when the tank casing 130 is moved from the second position SP2 to the first position SP1, the tank casing 130 is lowered to a position lower than the upper surface of the cabin 103. When the first position SP1 is set at such a height, the tank casing 130 moved to the first position SP1 is lower than the cabin 103. As a result, the tank casing 130 does not increase the bulk of the working vehicle 101, and the tank casing 130 does not become an obstacle during transportation of the working vehicle 101.

Specifically, it is assumed that H1 denotes a height of an upper end of the tank casing 130, and H2 denotes a height of an upper surface of the cabin 103 in FIG. 11. "The height of the tank casing 130 located in the first position SP1" described above is the height H1 of the upper end of the tank casing 130 in FIG. 11. The expression "the height of the tank casing 130 located in the first position SP1 is arranged at a position lower than an upper surface of the cabin 103" can be also interpreted as meaning that there is always a height difference ΔH (> 0) when the height H1 of the upper end of the tank casing 130 in FIG. 11 is subtracted from the height H2 of the upper surface of the cabin 103.

Specifically, as the moving mechanism 220, the moving mechanism as illustrated in FIGS. 11 to 13 can be used.

As illustrated in FIGS. 11 to 13, the moving mechanism 220 includes the actuator(s) 221, the placement portion 222, and boom portion(s) 223. The actuator 221 includes the first actuator 221a located at a position near a proximal end and the second actuator 221b located at a position near a distal end. The placement portion 222 has a flat plate shape extending along the horizontal direction, and allows the tank casing 130 and/or the fuel cell 108 to be placed thereon. The boom portion 223 includes a first boom portion 223a located at a position near the proximal end and a second boom portion 223b located at a position near the distal end.

Also, the moving mechanism 220 includes mast portion(s) 224, intermediate body(bodies) 225, multicoupler(s) 226, and head portion(s) 227.

The mast portion 224 is rotatably located on a side surface of the hood 109 of the working vehicle 101. A proximal end of the first boom portion 223a and a proximal end of the first actuator 221a are pivotally supported by the mast portion 224 so as to be swingable about axes extending in the vehicle-body width direction.

The intermediate body 225 is located between the first boom portion 223a and the second boom portion 223b. A distal end of the first boom portion 223a and a distal end of the first actuator 221a are pivotally supported by the intermediate body 225 so as to be swingable about axes extending in the vehicle-body width direction. First assist arm(s) 228a that assist(s) the first boom portion 223a in terms of strength is/are provided between the intermediate body 225 and the mast portion 224. The first assist arm 228a is attached so as to extend in a direction substantially parallel to the first boom portion 223a.

A proximal end of the second boom portion 223b and a proximal end of the second actuator 221b are pivotally supported by the intermediate body 225 so as to be swingable about axes extending in the vehicle-body width direction.

The multicoupler 226 is located at a distal end of the second boom portion 223b. The distal end of the second boom portion 223b is pivotally supported by the multicoupler 226 via a first interlocking arm 229a so as to be swingable about an axis extending in the vehicle-body width direction.

Second assist arm(s) 228b that assist(s) the second boom portion 223b in terms of strength is/are provided between the distal end and the proximal end of the second boom portion 223b. The second assist arm 228b is attached so as to extend in a direction substantially parallel to the second boom portion 223b.

The head portion 227 is pivotally supported at the distal end of the second boom portion 223b so as to be swingable about an axis extending in the vehicle-body width direction. The placement portion 222 is fixed to the head portion 227 so as to protrude sideward.

The moving mechanism 220 described above is provided with the first actuator 221a that swings the proximal end of the boom portion 223 with respect to the mast portion 224. That is, the mast portion 224, the first assist arm 228a, the intermediate body 225, and the first boom portion 223a define a parallel linkage. Thus, when the distance between the mast portion 224 and the intermediate body 225 is changed using the first actuator 221a, the proximal end of the boom portion 223 can be swung.

For example, when the first actuator 221a is extended, the boom portion 223 swings in a direction of rotating counterclockwise in FIG. 11 with respect to the mast portion 224. In contrast, when the first actuator 221a is retracted, the boom portion 223 swings in a direction of rotating counterclockwise in FIG. 11 with respect to the mast portion 224.

The multicoupler 226 is coupled to both the distal end of the second boom portion 223b and the head portion 227 so as to be swingable about an axis extending in the vehicle-body width direction. Also, the multicoupler 226 includes the first interlocking arm 229a coupled to the distal end of the second actuator 221b so as to be swingable about an axis extending in the vehicle-body width direction. The multicoupler 226 includes a second interlocking arm 229b that couples the first interlocking arm 229a and the head portion 227 to each other so as to be swingable about an axis extending in the vehicle-body width direction. That is, the multicoupler 226 is a parallel linkage including the first interlocking arm 229a, the second interlocking arm 229b, the second boom portion 223b, and the head portion 227. Thus, when the second actuator 221b is extended, the multicoupler 226 swings the head portion 227 so as to rotate clockwise in FIG. 11. In contrast, when the second actuator 221b is retracted, the multicoupler 226 swings the head portion 227 so as to rotate counterclockwise in FIG. 11.

That is, in the moving mechanism 220, when the first actuator 221a is retracted, the boom portion 223 swings rearward, and the boom portion 223 can be raised. In a case where the inclination angle of the placement portion 222 (head portion 227) with respect to the boom portion 223 is not changed, the placement portion 222 is inclined in accordance with the raising of the boom portion 223, and the tank casing 130 may fall. Thus, the second actuator 221b is retracted and the multicoupler 226 is used to swing the head portion 227 so as to rotate counterclockwise in FIG. 11. Then, the boom portion 223 can be raised while the posture of the placement portion 222 is maintained in a state along the horizontal direction. That is, the moving mechanism 220 can move the position of the placement portion 222 from the first position SP1 (the position illustrated in FIG. 11) to the second position SP2 (the position illustrated in FIG. 12).

The motion of the moving mechanism 220 described above is to raise the boom portion 223 while the tank casing 130 is placed on the placement portion 222, and move the position of the placement portion 222 from the first position SP1 to the second position SP2.

However, when the operation is performed in the completely reverse procedure of the procedure described above, the boom portion 223 can be tilted forward while the tank casing 130 is placed on the placement portion 222. That is, the moving mechanism 220 can also move the position of the placement portion 222 from the second position SP2 to the first position SP1.

In the working vehicle 101 of the second embodiment described above, the moving target of the moving mechanism 220 is limited to the tank casing 130. That is, the working vehicle 101 of the second embodiment includes the cabin 103 that houses the operator's seat 110 provided on the vehicle body 102, and the hood 109 located on the front portion of the vehicle body 102.

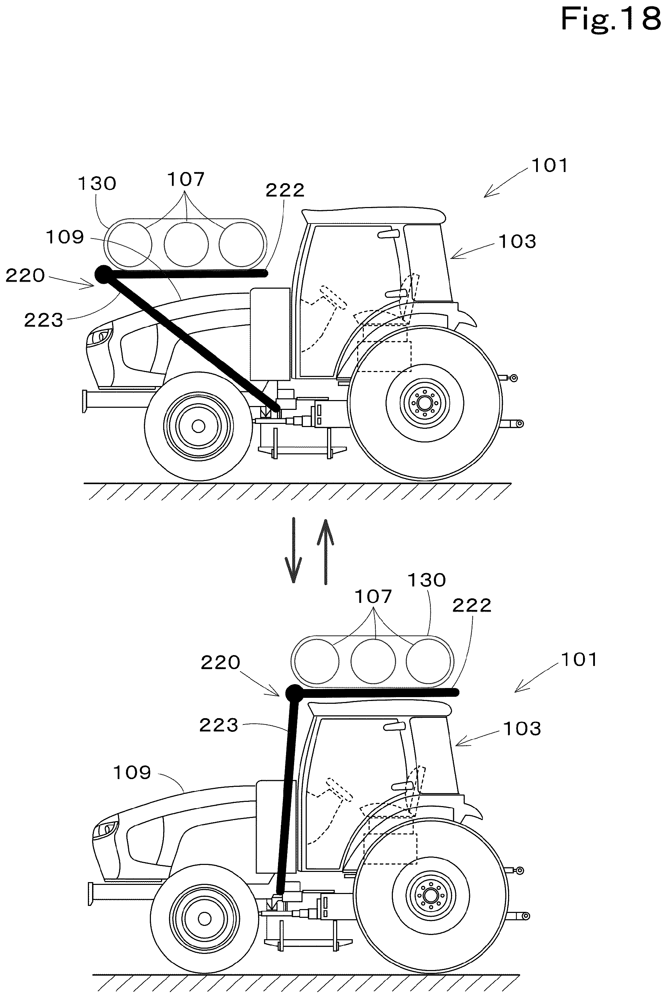

As illustrated in FIG. 18, the moving mechanism 220 supports the tank casing 130 and moves the tank casing 130 to the first position SP1 above the hood 109 and the second position SP2 above the cabin 103. In the working vehicle 101 of the second embodiment, the fuel cell 108 is housed inside the hood 109.

In the working vehicle 101 of the second embodiment, the tank casing 130 can be moved from the second position SP2 above the cabin 103 to the first position SP1 above the hood 109. The tank casing 130 located in the first position SP1 is located at a position lower than the upper surface of the cabin 103. Thus, as long as the first position SP1 is set at such a height, the tank casing 130 does not protrude upward from the upper surface of the cabin 103. Thus, the tank casing 130 does not become an obstacle during transportation of the working vehicle 101.

### <Third Embodiment>

Next, a working vehicle 101 of a third embodiment will be described.

Unlike the second embodiment described above, a moving mechanism 220 of the third embodiment whose moving target is only a fuel cell 108, and that moves the fuel cell 108 downward from an upper portion of a cabin 103 is taken as an example.

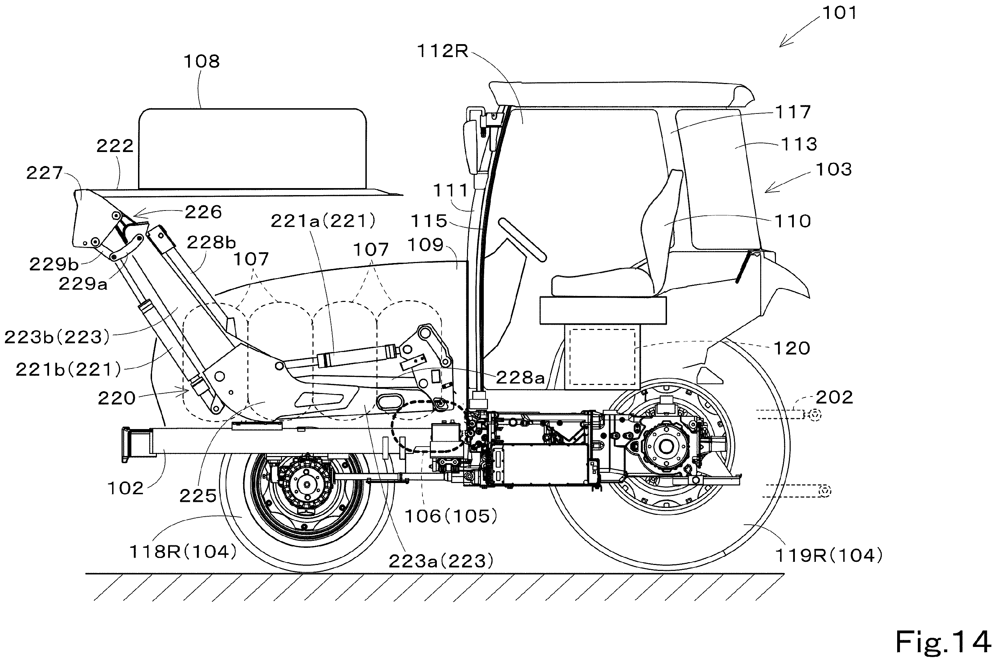

As illustrated in FIGS. 14 to 16, in the moving mechanism 220 of the third embodiment, the moving target is changed from the tank casing 130 (or the tank 107) to the fuel cell 108, but the definitions of a first position SP1 and a second position SP2 are the same as those of the second embodiment.

In the working vehicle 101 of the third embodiment, the fuel cell 108 is located on the upper portion of the cabin 103. The fuel cell 108 of the third embodiment includes a casing having a rectangular parallelepiped shape with rounded upper corners, and a plurality of unit cells are stacked inside the casing. The fuel cell 108 is supplied with hydrogen gas through a gas pipe. The gas pipe provided in the working vehicle 101 of the third embodiment is located rearward from at least one tank 107 located inside a hood 109. The gas pipe is arranged from the lower side toward the upper side through the inside of any one of a left front pillar, a right front pillar 115, a left rear pillar, and a right rear pillar 117 of the cabin 103.

In the fuel cell 108 of the third embodiment, power generation is performed using the hydrogen gas supplied through the gas pipe, and electricity is generated. The electricity generated by the fuel cell 108 is transmitted from the upper side to the lower side through the inside of any one of the left front pillar, the right front pillar 115, the left rear pillar, and the right rear pillar 117 of the cabin 103. The electricity transmitted to the lower side of the cabin 103 is transmitted to a battery 120 through a space below the floor of the cabin 103 and stored in the battery 120. Also, the electricity transmitted to the lower side of the cabin 103 is sent to a driving motor 106 provided at a vehicle body 102 to drive the driving motor 106.

In the working vehicle 101 of the third embodiment, the tank 107 is housed inside the hood 109. That is, the inside of the hood 109 is hollow, and a housing portion 162 is provided in the hood 109. The housing portion 162 houses a plurality of (eight in the illustrated example) tanks 107. The plurality of tanks 107 are housed in a standing state with their axes extending in the up-down direction.

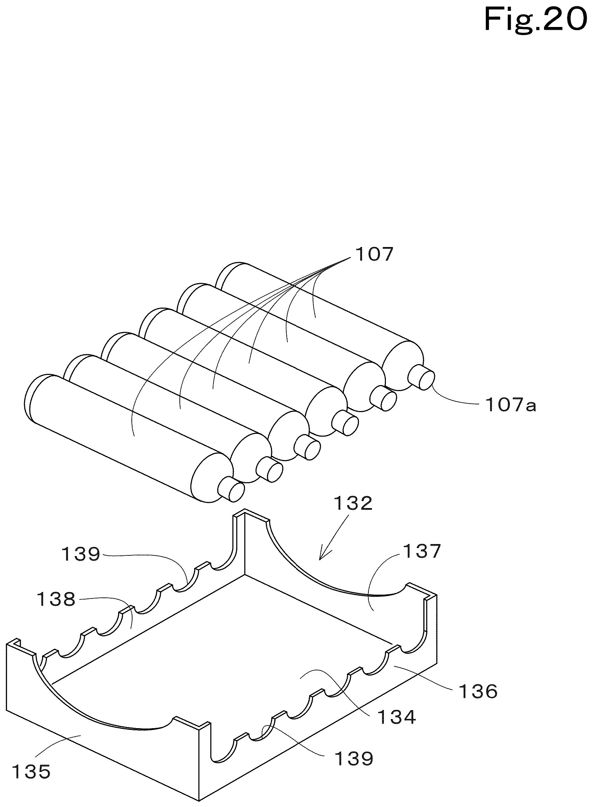

FIG. 20 illustrates a holding body 132 that holds at least one tank 107 housed inside the hood 109. The holding body 132 can house a plurality of tanks 107, and is fixed (rigidly fixed) to the vehicle body 102 by a fastening member such as a bolt, welding, or the like. The holding body 132 has a box shape having an inner dimension larger than that of the tank 107 described above, and houses the plurality of tanks 107. The holding body 132 of the present embodiment has a box shape that is open upward using a thick steel material or the like that can thermally and physically protect the tank 107 from the outside.

The holding body 132 has a bottom portion 134, a front wall portion 135, a left wall portion 136, a rear wall portion 137, and a right wall portion 138. The bottom portion 134 has a rectangular plate shape that is longer in the front-rear direction than in the vehicle-body width direction. The front wall portion 135 is provided in a standing manner along the up-down direction at a front edge of the bottom portion 134. The left wall portion 136 is provided in a standing manner along the up-down direction at a left edge of the bottom portion 134. The rear wall portion 137 is provided in a standing manner along the up-down direction at a rear edge of the bottom portion 134. The right wall portion 138 is provided in a standing manner along the up-down direction at a right edge of the bottom portion 134. The bottom portion 134 of the holding body 132 is fixed to the upper portion of the vehicle body 102 by means of fastening using, for example, a bolt, welding, or the like.

At least one cutout portion 139 recessed downward in an arc shape is provided at an upper edge of each of the front wall portion 135 and the rear wall portion 137 of the holding body 132. The at least one cutout portion 139 includes four cutout portions 139 provided at each of the front wall portion 135 and the rear wall portion 137 in accordance with the number of tanks 107 that can be housed. The cutout portions 139 house the tanks 107 in a one-to-one correspondence so that one neck 107a is fitted into the recessed portion of one cutout portion 139. Since the neck 107a is fitted into the recessed portion of the cutout portion 139, the holding body 132 houses the tank 107 so as not to cause the tank 107 to roll.

The moving mechanism 220 of the third embodiment is provided with an actuator 221, a placement portion 222, a boom portion 223, a mast portion 224, an intermediate body 225, a multicoupler 226, a head portion 227, and the like, which are similar to those of the second embodiment. These members have the same configurations as those of the second embodiment except that the fuel cell 108 is placed on the placement portion 222 instead of the tank casing 130.

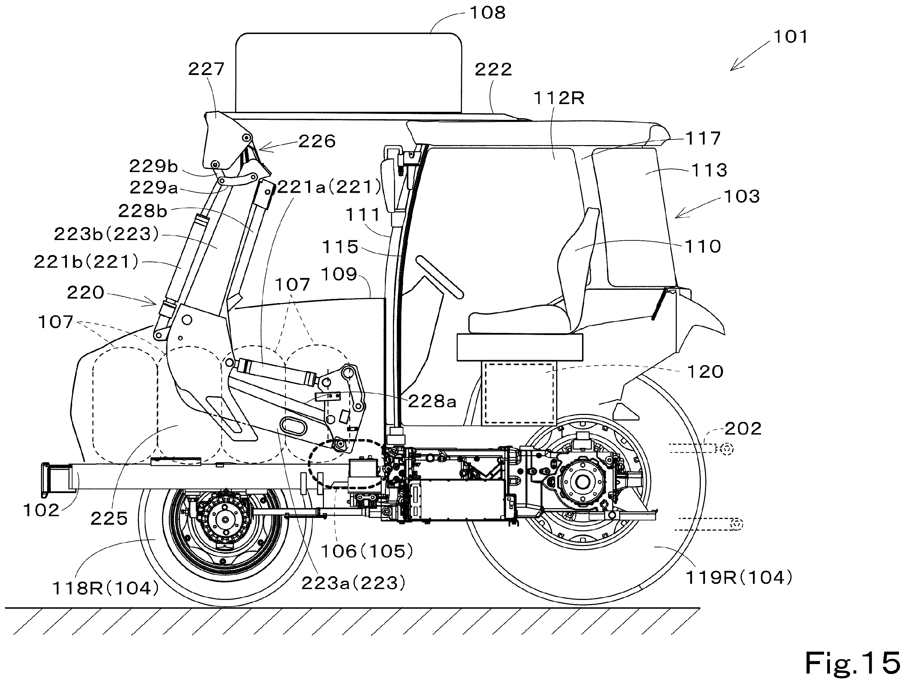

Thus, also in the moving mechanism 220 of the third embodiment, when the first actuator 221a is retracted, the boom portion 223 swings rearward, and the boom portion 223 can be raised. In a case where the inclination angle of the placement portion 222 (head portion 227) with respect to the boom portion 223 is not changed, the placement portion 222 is inclined in accordance with the raising of the boom portion 223, and the fuel cell 108 may fall. Thus, the second actuator 221b is retracted and the multicoupler 226 is used to swing the head portion 227 so as to rotate counterclockwise in FIG. 14. Then, the boom portion 223 can be raised while the posture of the placement portion 222 is maintained in a state along the horizontal direction. That is, the moving mechanism 220 can move the position of the placement portion 222 from the first position SP1 (the position illustrated in FIG. 14) to the second position SP2 (the position illustrated in FIG. 15).

The motion of the moving mechanism 220 described above is to raise the boom portion 223 while the fuel cell 108 is placed on the placement portion 222, and move the position of the placement portion 222 from the first position SP1 to the second position SP2. However, when the operation is performed in the completely reverse procedure of the procedure described above, the boom portion 223 can be tilted forward while the fuel cell 108 is placed on the placement portion 222. That is, the moving mechanism 220 of the third embodiment can also move the position of the placement portion 222 from the second position SP2 to the first position SP1.

In the working vehicle 101 of the third embodiment described above, the moving target of the moving mechanism 220 is limited to the fuel cell 108. That is, the working vehicle 101 of the third embodiment includes the cabin 103 that houses an operator's seat 110 provided on the vehicle body 102, and the hood 109 located on a front portion of the vehicle body 102. Also, the moving mechanism 220 supports the fuel cell 108 and moves the fuel cell 108 to the first position SP1 above the hood 109 and the second position SP2 above the cabin 103. In the working vehicle 101 of the third embodiment, the tanks 107 are housed inside the hood 109.

In the working vehicle 101 of the third embodiment, the fuel cell 108 can be moved from the second position SP2 above the cabin 103 to the first position SP1 above the hood 109. The fuel cell 108 located in the first position SP1 is located at a position lower than an upper surface of the cabin 103. Thus, as long as the first position SP1 is set at such a height, the fuel cell 108 does not protrude upward from the upper surface of the cabin 103. Thus, the fuel cell 108 does not become an obstacle during transportation of the working vehicle 101.

### <Fourth Embodiment>

In the working vehicle 101 of the second embodiment described above, the tanks 107 are located side by side in the front-rear direction with their axes extending in the left-right direction on the upper portion of the cabin 103. Also, in the working vehicle 101 of the third embodiment, the tanks 107 are located side by side in the front-rear direction and the left-right direction with their axes extending in the up-down direction. However, in the working vehicle 101 of the present invention, the tanks 107 may be located side by side in the left-right direction with their axes extending in the front-rear direction.

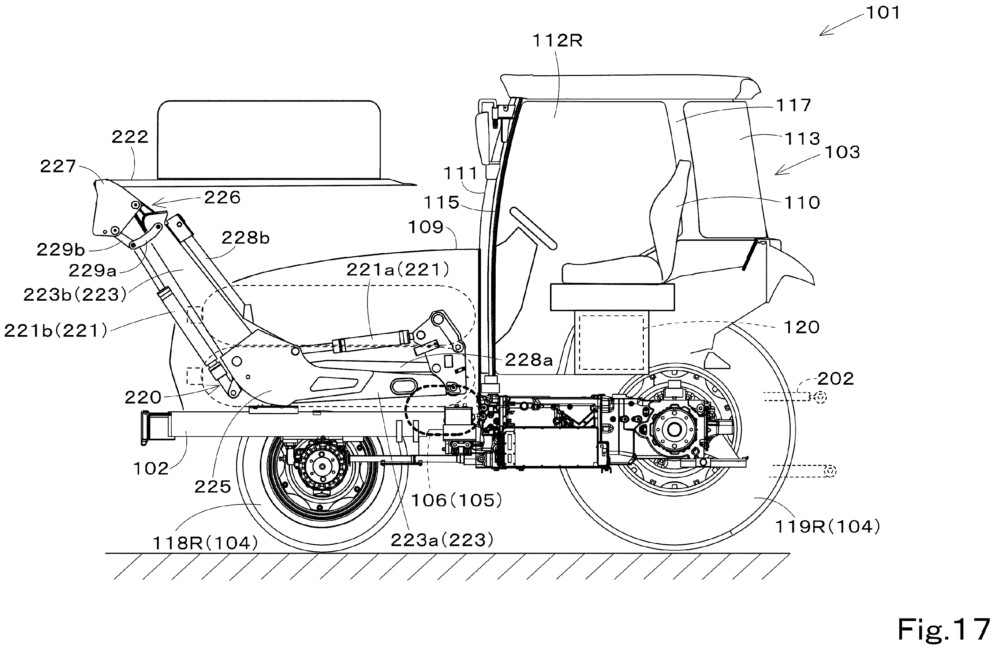

For example, FIG. 17 illustrates a working vehicle 101 of a fourth embodiment in which tanks 107 are located side by side in the left-right direction with their axes extending in the front-rear direction.

In the working vehicle 101 of the fourth embodiment, the outer shape of the hood 109 is long in the front-rear direction and narrow in the left-right direction. Thus, as in the fourth embodiment, when the tanks 107 are located with their axes extending in the front-rear direction, the tanks 107 can be housed using the space inside the hood 109 (housing portion 162) without leaving a space.

The present invention provides working vehicles 1 described in the following items. (Item 1) A working vehicle 1 including a vehicle body 2, a traveling device 4 to support the vehicle body 2 such that the vehicle body 2 is allowed to travel, a hydrogen tank 5 to store hydrogen gas, a driving device 6 to drive the traveling device 4 using the hydrogen gas as an energy source, a gas fill port 13 to allow a gas fill nozzle G1 of an external hydrogen gas supplier GS to be connected thereto when the hydrogen tank 5 is supplied with the hydrogen gas, and a moving mechanism 14 to couple the vehicle body 2 and the gas fill port 13 to each other and to move relative positions of the gas fill port 13 and the vehicle body 2.

With the working vehicle 1 according to item 1, the gas fill nozzle G1 can be connected by moving the gas fill port 13, and therefore the gas fill nozzle G1 can be smoothly connected to the gas fill port 13. Thus, the performance of gas filling work is significantly improved.

(Item 2) The working vehicle 1 according to item 1, wherein the moving mechanism 14 includes a swing frame 31 including a distal end portion including the gas fill port 13 and a proximal end portion pivotally coupled to the vehicle body 2.

With the working vehicle 1 according to item 2, when the swing frame 31 is rotated, the gas fill port 13 moves accordingly, and therefore the work of connecting the gas fill nozzle G1 to the gas fill port 13 can be smoothly performed. Thus, the performance of gas filling work is further improved.

(Item 3) The working vehicle 1 according to item 2, further including a gas injection pipeline L1 to guide the hydrogen gas from the gas fill port 13 to the hydrogen tank 5, wherein the gas injection pipeline L1 extends along the swing frame 31.

With the working vehicle 1 according to item 3, the gas injection pipeline L1 is less likely to hinder smooth rotation of the swing frame 31, and therefore the work of connecting the gas fill nozzle G1 to the gas fill port 13 can be more smoothly performed. Thus, the performance of gas filling work is further improved.

(Item 4) The working vehicle 1 according to item 2, wherein the moving mechanism 14 includes a hinge 32 to allow the swing frame 31 to move between a folded position in which the swing frame 31 extends in a left-right direction along a rear portion of the vehicle body 2 and an unfolded position in which the swing frame 31 extends rearward from the rear portion of the vehicle body 2.

With the working vehicle 1 according to item 4, the swing frame 31 can be easily switched between the folded position and the unfolded position, and therefore the work of connecting the gas fill nozzle G1 to the gas fill port 13 can be more smoothly performed. Thus, the performance of gas filling work is further improved.

(Item 5) The working vehicle 1 according to item 4, wherein the gas fill port 13 is positioned such that a connection end portion of the gas fill port 13 is directed rearward of the vehicle body 2 when the swing frame 31 is in the folded position, and is positioned such that the connection end portion is directed sideward of the vehicle body 2 when the swing frame 31 is in the unfolded position.

With the working vehicle 1 according to item 5, the direction of the gas fill port 13 can be easily switched between the posture in which the connection end portion is directed rearward of the vehicle body 2 and the posture in which the connection end portion is directed sideward of the vehicle body 2, and therefore the degree of freedom of the direction and the position in which the working vehicle 1 is stopped with respect to the hydrogen gas supplier GS is high. Thus, the performance of gas filling work is further improved.

(Item 6) The working vehicle 1 according to item 1, further including a gas injection pipeline L1 to guide the hydrogen gas from the gas fill port 13 to the hydrogen tank 5, wherein the moving mechanism 14 includes a bendable extension pipe 34 including a distal end portion to which the gas fill port 13 is connected and a proximal end portion connected to the gas injection pipeline L1.

With the working vehicle 1 according to item 6, the gas fill port 13 is moved by bending the extension pipe 34, and therefore the work of connecting the gas fill nozzle G1 to the gas fill port 13 can be smoothly performed. Also, the degree of freedom of the direction of the gas fill port 13 is high. Thus, the performance of gas filling work is further improved.

(Item 7) The working vehicle 1 according to item 6, wherein the moving mechanism 14 includes a pipe housing portion 36 to house the extension pipe 34 when the gas fill port 13 is moved in a direction toward the vehicle body 2.

With the working vehicle 1 according to item 7, when the gas fill port 13 is not separated from the vehicle body 2 and not used, the extension pipe 34 can be housed in the pipe housing portion 36, and therefore the extension pipe 34 does not become an interference during traveling or work. Also, the design of the working vehicle 1 is not impaired.

(Item 8) The working vehicle 1 according to item 7, wherein the moving mechanism 14 includes a pipe driver 37 to move the extension pipe 34 between a retracted position in which the extension pipe 34 is housed in the pipe housing portion 36 and an extended position in which the extension pipe 34 is exposed to outside of the pipe housing portion 36.

With the working vehicle 1 according to item 8, the motion of storing the extension pipe 34 in the pipe housing portion 36 and the motion of exposing (pulling out) the extension pipe 34 from the pipe housing portion 36 can be achieved by the pipe driver 37, and therefore the work of connecting the gas fill nozzle G1 to the gas fill port 13 can be performed more smoothly. Thus, the performance of gas filling work is further improved.

(Item 9) The working vehicle 1 described in any one of items 1 to 8, wherein the moving mechanism 14 is provided at a protection frame 16 vertically provided in the vicinity of an operator's seat P1 of the vehicle body 2.

With the working vehicle 1 according to item 9, the rigidity of the entire moving mechanism 14 can be ensured, and therefore the work of connecting the gas fill nozzle G1 to the gas fill port 13 can be smoothly performed. Thus, the performance of gas filling work is further improved.

(Item 10) The working vehicle 1 according to any one of items 1 to 8, wherein the moving mechanism 14 is provided at a fixed frame 10 vertically provided on the vehicle body 2 to support the hydrogen tank 5.

With the working vehicle 1 according to item 10, the rigidity of the entire moving mechanism 14 can be ensured, and therefore the work of connecting the gas fill nozzle G1 to the gas fill port 13 can be smoothly performed. Thus, the performance of gas filling work is further improved.

(Item 11) The working vehicle 1 according to item 10, wherein the moving mechanism 14 is configured to position the gas fill port 13 between the vehicle body 2 and the fixed frame 10 when the gas fill port 13 is moved in a direction toward the vehicle body 2.

With the working vehicle 1 according to item 11, when the gas fill port 13 is not separated from the vehicle body 2 and not used, the gas fill port 13 can be housed in the interior space defined by the fixed frame 10 (on the vehicle body 2 side), and therefore the gas fill port 13 does not become an interference during traveling or work. Also, it is possible to eliminate or reduce the likelihood that an external object such as a worker or a tree contacts the gas fill port 13.

(Item 12) The working vehicle 1 according to item 11, wherein the driving device 6 includes a driving motor 7 to drive the traveling device 4, and a fuel cell unit 8 to generate electric power using the hydrogen gas and supply the electric power to the driving motor 7.

With the working vehicle 1 according to item 12, the present invention can be applied to working vehicles 1 (so-called FCV) in which the fuel cell unit 8 generates electric power using hydrogen gas supplied from the hydrogen tank 5 and the driving motor 7 is driven by the electric power.

(Item 13) A working vehicle 101 including a vehicle body 102, a traveling device 104 to support the vehicle body 102 and cause the vehicle body 102 to travel, a driving motor 106 to drive the traveling device 104, a fuel cell 108 to supply electric power to the driving motor 106, a tank 107 to supply gas for fuel to the fuel cell 108, and a moving mechanism 220 to move the fuel cell 108 and/or the tank 107 in an up-down direction with respect to the vehicle body 102.

With the working vehicle 101 according to item 13, the installation height of the fuel cell 108 and/or the tank 107 can be changed as desired, and even when the fuel cell 108 and/or the tank 107 is/are provided at the upper portion of the cabin 103, the bulk during transportation can be kept low.

(Item 14) The working vehicle 101 according to item 13, further including a casing 130 to house the tank 107, wherein the moving mechanism 220 is configured to move the fuel cell 108 and/or the casing 130 in the up-down direction with respect to the vehicle body 102.

With the working vehicle 101 according to item 14, since the tank 107 is housed in the casing 130, when the tank 107 is moved by the moving mechanism 220, it is possible to prevent or reduce occurrence of a problem such as falling of the tank 107.

(Item 15) The working vehicle 101 according to item 14, further including a cabin 103 to house an operator's seat 110 provided on the vehicle body 102, and a hood 109 located at a front portion of the vehicle body 102, wherein the hood 109 is lower than the cabin 103, the moving mechanism 220 is configured to support the fuel cell 108 and/or the casing 130, and move the fuel cell 108 and/or the casing 130 between a first position SP1 above the hood 109 and a second position SP2 above the cabin 103, and the fuel cell 108 and/or the casing 130 in the first position SP1 is/are located lower than the cabin 103.

As in the working vehicle 101 according to item 15, provided that the fuel cell 108 and/or the casing 130 is/are moved between the first position SP1 and the second position SP2 by the moving mechanism 220, the fuel cell 108 and/or the casing 130 do/does not protrude upward from the upper surface of the cabin 103, and these members do not become obstacles during transportation of the working vehicle 101.

(Item 16) The working vehicle 101 according to item 14, wherein the moving mechanism 220 includes an actuator 221, a placement portion 222 for placement of the fuel cell 108 and/or the casing 130, and a boom portion 223 to be driven by the actuator 221 and support the placement portion 222 such that the placement portion is movable in the up-down direction between the first position SP1 and the second position SP2.

As in the working vehicle 101 according to item 16, since the moving mechanism 220 including the placement portion 222, the boom portion 223, and the actuator 221 is used, the fuel cell 108 and/or the casing 130 can be reliably moved between the first position SP1 and the second position SP2.

(Item 17) The working vehicle 101 according to item 14, further including a cabin 103 to house an operator's seat 110 provided on the vehicle body 102, and a hood 109 located at a front portion of the vehicle body 102, wherein the moving mechanism 220 is configured to support the casing 130, and move the casing 130 between a first position SP1 above the hood 109 and a second position SP2 above the cabin 103, and the fuel cell 108 is housed inside the hood 109.

(Item 18) The working vehicle 101 according to item 13, further including a cabin 103 to house an operator's seat 110 provided on the vehicle body 102, and a hood 109 located at a front portion of the vehicle body 102, wherein the moving mechanism 220 is configured to support the fuel cell 108, and move the fuel cell 108 between a first position SP1 above the hood 109 and a second position SP2 above the cabin 103, and the tank 107 is housed inside the hood 109.

The working vehicle 101 according to item 17 and item 18 can satisfactorily obtain the advantage of lowering the height of the fuel cell 108 and/or the tank 107 by the moving mechanism 220.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: cabin
- 4: traveling device
- 5: hydrogen tank
- 6: driving device
- 7: driving motor
- 8: fuel cell stack (fuel cell unit)
- 9: battery unit
- 10: fixed frame
- 11: hood
- 12: tank case
- 13: gas fill port
- 14: moving mechanism
- 16: pillar (protection frame)
- 31: swing frame
- 32: hinge
- 34: extension pipe
- 36: pipe housing portion
- 37: pipe driver
- G1: gas fill nozzle
- GS: hydrogen gas supplier
- L1: gas injection pipe (gas injection pipeline)
- P1: operator's seat
- 101: working vehicle
- 102: vehicle body
- 103: cabin
- 104: traveling device
- 105: driving device
- 106: driving motor
- 107: tank
- 108: fuel cell
- 109: hood
- 110: operator's seat
- 130: casing (tank casing)
- 220: moving mechanism
- 221: actuator
- 222: placement portion
- 223: boom portion
- SP1: first position
- SP2: second position

## Claims

1. A working vehicle comprising:
a vehicle body;
a traveling device to support the vehicle body such that the vehicle body is allowed to travel;
a hydrogen tank to store hydrogen gas;
a driving device to drive the traveling device using the hydrogen gas as an energy source;
a gas fill port to allow a gas fill nozzle of an external hydrogen gas supplier to be connected thereto when the hydrogen tank is supplied with the hydrogen gas; and
a moving mechanism to couple the vehicle body and the gas fill port to each other and to move relative positions of the gas fill port and the vehicle body.

2. The working vehicle according to claim 1, wherein the moving mechanism includes a swing frame including a distal end portion including the gas fill port and a proximal end portion pivotally coupled to the vehicle body.

3. The working vehicle according to claim 2, further comprising:
a gas injection pipeline to guide the hydrogen gas from the gas fill port to the hydrogen tank; wherein
the gas injection pipeline extends along the swing frame.

4. The working vehicle according to claim 2, wherein the moving mechanism includes a hinge to allow the swing frame to move between a folded position in which the swing frame extends in a left-right direction along a rear portion of the vehicle body and an unfolded position in which the swing frame extends rearward from the rear portion of the vehicle body.

5. The working vehicle according to claim 4, wherein the gas fill port is positioned such that a connection end portion of the gas fill port is directed rearward of the vehicle body when the swing frame is in the folded position, and is positioned such that the connection end portion is directed sideward of the vehicle body when the swing frame is in the unfolded position.

6. The working vehicle according to claim 1, further comprising:
a gas injection pipeline to guide the hydrogen gas from the gas fill port to the hydrogen tank; wherein
the moving mechanism includes a bendable extension pipe including a distal end portion to which the gas fill port is connected and a proximal end portion connected to the gas injection pipeline.

7. The working vehicle according to claim 6, wherein the moving mechanism includes a pipe housing portion to house the extension pipe when the gas fill port is moved in a direction toward the vehicle body.

8. The working vehicle according to claim 7, wherein the moving mechanism includes a pipe driver to move the extension pipe between a retracted position in which the extension pipe is housed in the pipe housing portion and an extended position in which the extension pipe is exposed to outside of the pipe housing portion.

9. The working vehicle according to any one of claims 1 to 8, wherein the moving mechanism is provided at a protection frame vertically provided in the vicinity of an operator's seat of the vehicle body.

10. The working vehicle according to any one of claims 1 to 8, wherein the moving mechanism is provided at a fixed frame vertically provided on the vehicle body to support the hydrogen tank.

11. The working vehicle according to claim 10, wherein the moving mechanism is configured to position the gas fill port between the vehicle body and the fixed frame when the gas fill port is moved in a direction toward the vehicle body.

12. The working vehicle according to claim 1, wherein
the driving device includes:
a driving motor to drive the traveling device; and
a fuel cell unit to generate electric power using the hydrogen gas and supply the electric power to the driving motor.

13. A working vehicle comprising:
a vehicle body;
a traveling device to support the vehicle body and cause the vehicle body to travel;
a driving motor to drive the traveling device;
a fuel cell to supply electric power to the driving motor;
a tank to supply gas for fuel to the fuel cell; and
a moving mechanism to move the fuel cell and/or the tank in an up-down direction with respect to the vehicle body.

14. The working vehicle according to claim 13, further comprising:
a casing to house the tank; wherein
the moving mechanism is configured to move the fuel cell and/or the casing in the up-down direction with respect to the vehicle body.

15. The working vehicle according to claim 14, further comprising:
a cabin to house an operator's seat provided on the vehicle body; and
a hood located at a front portion of the vehicle body; wherein
the hood is lower than the cabin;
the moving mechanism is configured to support the fuel cell and/or the casing, and move the fuel cell and/or the casing between a first position above the hood and a second position above the cabin; and
the fuel cell and/or the casing in the first position is/are located lower than the cabin.

16. The working vehicle according to claim 14, wherein
the moving mechanism includes:
an actuator;
a placement portion for placement of the fuel cell and/or the casing; and
a boom portion to be driven by the actuator and support the placement portion such that the placement portion is movable in the up-down direction between the first position and the second position.

17. The working vehicle according to claim 14, further comprising:
a cabin to house an operator's seat provided on the vehicle body; and
a hood located at a front portion of the vehicle body; wherein
the moving mechanism is configured to support the casing, and move the casing between a first position above the hood and a second position above the cabin; and
the fuel cell is housed inside the hood.

18. The working vehicle according to claim 13, further comprising:
a cabin to house an operator's seat provided on the vehicle body; and
a hood located at a front portion of the vehicle body; wherein
the moving mechanism is configured to support the fuel cell, and move the fuel cell between a first position above the hood and a second position above the cabin; and
the tank is housed inside the hood.
